(19) Europäisches Patentamt / European Patent Office / Office européen des brevets

(11) **EP 4 559 697 B1**

(12) **EUROPEAN PATENT SPECIFICATION**

(45) Date of publication and mention
of the grant of the patent:
**08.07.2026 Bulletin 2026/28**

(21) Application number: **24208874.8**

(22) Date of filing: **25.10.2024**

(51) International Patent Classification (IPC):
**B60C 1/00** *(2006.01)*     **B60C 11/00** *(2006.01)*
**B60C 11/04** *(2006.01)*     **C08K 3/36** *(2006.01)*

(52) Cooperative Patent Classification (CPC):
(C-Sets available)
**B60C 11/1281; B60C 1/0016; B60C 11/0323;**
**B60C 11/04; B60C 11/042; C08K 3/36;**
B60C 11/0306; B60C 2011/0025; B60C 2011/0341;
B60C 2011/0348; B60C 2011/0353; C08K 2201/005;
C08K 2201/006; C08K 2201/011; Y02T 10/86
(Cont.)

(54) **TIRE FOR HEAVY LOAD**

REIFEN FÜR SCHWERE LASTEN

PNEUMATIQUE POUR CHARGE LOURDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.11.2023 JP 2023197500**

(43) Date of publication of application:
**28.05.2025 Bulletin 2025/22**

(73) Proprietor: **Sumitomo Rubber Industries, Ltd.
Kobe-shi, Hyogo 651-0072 (JP)**

(72) Inventor: **NAGAI, Haruka
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A- 4 197 805**     **EP-A1- 4 389 457**
**EP-A1- 4 438 335**     **US-A1- 2023 023 252**
**US-A1- 2023 219 370**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08L 47/00, C08K 3/04, C08K 3/36, C08K 5/548, C08K 5/18, C08K 5/47, C08K 5/31;**

**C08L 7/00, C08L 9/06, C08L 9/00, C08L 47/00, C08K 3/04, C08K 3/36, C08K 5/548, C08K 5/18, C08K 5/47, C08K 5/31;**
**C08L 7/00, C08L 9/06, C08L 47/00, C08K 3/04, C08K 3/36, C08K 5/548, C08K 5/18, C08K 5/47, C08K 5/31**

**Description**

TECHNICAL FIELD

The present invention relates to a tire for heavy load.

BACKGROUND OF THE INVENTION

Due to recent environmental issues, electric vehicles (EVs) are becoming more popular, even for large vehicles such as trucks, buses, and the like. The EVs weigh more than conventional engine vehicles and also have increased torque because they are motor-driven, so tires for large EVs require high abrasion resistance. Moreover, recent environmental regulations have increased the demand for fuel efficiency, wet grip performance, and the like, even with a truck tire or a bus tire.

As a technique to improve abrasion resistance of a truck tire or a bus tire, a technique to make fine particles or a high structure for carbon black, for example, is known (see JPH06-279624A).

Moreover, as a technique to improve wet grip performance of a tire for heavy load, a technique to form, at an inner end part of a lug groove, a shallow bottom part of a predetermined size, for example, is known (see JPH11-5411A).

A tire for heavy load having the features of the preamble of claim 1 is known from US 2023/219370 A1. Related tires are described in US 2023/023252 A1, EP 4 197 805 A1, EP 4 389 457 A1 and EP 4 438 335 A1.

SUMMARY OF THE INVENTION

As the actual ground contact area ratio (land ratio) decreases when a tread part is provided with a large number of lug grooves and the like, the rigidity of the land part tends to decrease. There is a problem that the tread part tends to generate heat as a result and abrasion resistance of a tire further decreases.

Moreover, with the above-described technique to make fine particles or high structure for carbon black, improvement in fuel efficiency of tires cannot be said to be sufficient. Moreover, due to deterioration of processability along with making the fine particles for carbon black, the dispersibility of carbon black also deteriorates, and conversely abrasion resistance of a tire may also deteriorate. Therefore, there was a limitation with a conventional technique to improve performance by an improvement in carbon black.

An object of the present invention is to provide a tire for heavy load that makes it possible to achieve an improvement in wet grip performance thereof.

A tire of the present invention is a tire for heavy load, which tire comprises a tread part, wherein the tread part comprises a main circumferential groove in a plurality, which main circumferential groove extends continuously in the tire circumferential direction, a pair of shoulder land parts divided by the main circumferential groove and a ground end, and a crown land part positioned between the pair of shoulder land parts, wherein the crown land part comprises one or a plurality of thin circumferential grooves extending continuously in the tire circumferential direction, wherein the tread part is composed of a rubber composition comprising a rubber component and silica, and wherein the groove width of the main circumferential groove is defined as Ws, in mm, the groove width of the thin circumferential groove is defined as Wc, in mm, and the $\tan \delta$ at 0°C of the rubber composition is defined as 0°C $\tan \delta$, 0°C $\tan \delta$ is 0.28 or more and 0°C $\tan \delta$ / (Wc / Ws) is over 1.0, wherein the $\tan \delta$ at 0°C is measured under a condition of a frequency of 10 Hz, an initial strain of 10%, a dynamic strain of $\pm 2.5\%$, and an elongation mode using a dynamic viscoelasticity evaluation apparatus.

According to the present invention, a tire for heavy load that makes it possible to achieve an improvement in wet grip performance thereof is provided.

According to an embodiment of the invention, the filler comprises silica having an average primary particle diameter of 17 nm or less.

According to an embodiment of the invention, the rubber component comprises a styrene-butadiene rubber.

According to an embodiment of the invention, a content of silica in the filler is over 50% by mass, preferably over 60% by mass, and more preferably over 70% by mass and less than 99% by mass.

According to an embodiment of the invention, the thin circumferential groove comprises a neck part having a small groove width, and a trunk part arranged on the inner side of the neck part in the tire radial direction, which trunk part has a portion with a groove width greater than the maximum groove width of the neck part.

According to an embodiment of the invention, the tire comprises a jointless band.

According to an embodiment of the invention, Wc/Ws is 0.09 or more.

According to an embodiment of the invention, the total styrene amount in the rubber component is defined as S, in % by mass, a content of silica based on 100 parts by mass of the rubber component in the rubber composition is defined as D, in parts by mass, S / D is 0.13 or more.

According to an embodiment of the invention, the complex elastic modulus at 0°C (0°C E*) of the rubber composition is 8.0 MPa or more and 16.0 MPa or less, wherein the complex elastic modulus at 0°C (0°C E*) is measured under a condition of a frequency of 10 Hz, an initial strain of 10%, a dynamic strain of ±2.5%, and an elongation mode using a dynamic viscoelasticity evaluation apparatus.

According to an embodiment of the invention, the pair of shoulder land parts does not comprise a lug groove.

According to an embodiment of the invention, a groove depth H1 of the deepest part of the main circumferential groove is 15.0 mm or less, preferably 10.0 mm or more and 14.8 mm or less.

According to an embodiment of the invention, the crown land part comprises a sipe extending in the tire width direction and the depth of the deepest part of the sipe is defined as H2, in mm, H2 / H1 is 0.25 or more, preferably 0.33 or more and 1.0 or less.

According to an embodiment of the invention, the content of silica based on 100 parts by mass of the rubber component in the rubber composition is defined as D, in parts by mass, H1 x D is 250 or more, preferably 300 or more and 1200 or less.

According to an embodiment of the invention, the tread ground width is defined as TW, in mm, Wc/TW is 0.003 or more and 0.020 or less, Ws/TW is over 0.020 and 0.060 or less.

According to an embodiment of the invention, the tire further comprises a belt layer, wherein a plurality of belt plies constituting the belt layer comprises two belt plies having a width greater than the width of the jointless band, and the jointless band is sandwiched by the two belt plies having the greater width.

BRIEF DESCRIPTION OF THE DRAWINGS

FIG. 1 is a meridian sectional view of a tire for heavy load according to one embodiment of the present invention.
FIG. 2 is a meridian sectional view of a tire for heavy load according to another embodiment.
FIG. 3 is a view showing one example of an embodiment of a jointless band.
FIG. 4 is a developed view of a tread part of the tire in FIG. 1.
FIG. 5 is a cross-sectional view cut along a line C-C of a crown sipe 10 in FIG. 4.
FIG. 6 is a cross-sectional view showing a thin circumferential groove.
FIG. 7 is a cross-sectional view showing a variation of the thin circumferential groove.
FIG. 8 is a cross-sectional view showing a thin circumferential groove of an example.

DETAILED DESCRIPTION

A tire for heavy load being one embodiment of the present invention is a tire for heavy load, which tire comprises a tread part, wherein the tread part comprises a main circumferential groove in a plurality, which main circumferential groove extends continuously in the tire circumferential direction, a pair of shoulder land parts divided by the main circumferential groove and a ground end, and a crown land part positioned between the pair of shoulder land parts, wherein the crown land part comprises one or a plurality of thin circumferential grooves extending continuously in the tire circumferential direction, wherein the tread part is composed of a rubber composition comprising a rubber component and a filler, and wherein the groove width of the main circumferential groove is defined as Ws, in mm, the groove width of the thin circumferential groove is defined as Wc, in mm, and the tan $\delta$ at 0°C of the rubber composition is defined as 0°C tan $\delta$, 0°C tan $\delta$ is 0.28 or more and 0°C tan $\delta$ /(Wc / Ws) is over 1.0.

The mechanism for an improvement in wet grip performance in the tire for heavy load of the present invention, though it is not intended to be bound by theory, can be considered as follows, for example:

It is considered that 0°C tan $\delta$ of the rubber composition constituting the tread part being in the above-described range makes it possible to easily produce the energy loss on the tread part surface, even on the wet road surface.

Moreover, it is considered that the crown part being provided with a groove having a groove width less than that of the main circumferential groove makes it easier for the crown part to be in contact with the road surface when the tire rolls, making it possible to further enhance wet grip performance.

Furthermore, it is considered that as the ratio of 0°C tan $\delta$ to Wc/Ws being set to be in the above-described range decreases the actual ground contact area ratio in a case that Wc/Ws is large, increasing 0°C tan $\delta$ allows making it easier to improve wet grip performance. On the other hand, it is considered that the groundability can be improved even when Wc/Ws is decreased in a case that 0°C tan $\delta$ is relatively small.

Then, it is considered that a notable effect is achieved with the cooperation of these aspects, which notable effect is that wet grip performance of the tire for heavy load significantly improves.

The filler preferably comprises silica having an average primary particle diameter of 17 nm or less.

It is considered that the rubber composition constituting the tread part (below also called the tread rubber) comprising the fine particle silica allows making it easier to increase the heat-generating properties (tan $\delta$) at low

temperature around 0°C, making it possible to make it easier to improve wet grip performance.

The rubber component preferably comprises a styrene-butadiene rubber.

It is considered that the rubber component comprising the styrene-butadiene rubber allows forming fine domains of styrene portions in the tread rubber to obtain friction around the domain portions and a scratching effect by the domain portions, making it possible to make it easier to improve wet grip performance.

A content of silica in the filler is preferably over 50% by mass.

It is considered that the filler comprising over 50% by mass of silica improves the hydrophilicity of the silica surface, making it possible to make it easier to obtain the followability with respect to the road surface of the tread rubber and also to make it easier to increase the heat-generating properties (tan $\delta$) of the tread rubber at 0°C. It is considered that these cooperate, so that wet grip performance further improves.

The thin circumferential groove preferably comprises a neck part having a small groove width, and a trunk part arranged on the inner side of the neck part in the tire radial direction, which trunk part comprises a portion with a groove width greater than the maximum groove width of the neck part.

It is considered that providing such a groove with an increased space on the inner side in the tire radial direction makes it easier for the tread land part to deform, making it easier to improve the groundability of the tread rubber, so that wet grip performance further improves.

The tire for heavy load according to the present embodiment preferably comprises a jointless band.

It is considered that providing a jointless band makes it possible to increase the circumferential rigidity of the tread part and makes it easier to generate the reaction force at the time of braking, so that wet grip performance further improves.

Wc/Ws is preferably 0.09 or more, from a viewpoint of securing wet grip performance.

Preferably, the total styrene amount in the rubber component is defined as S, in % by mass, a content of silica based on 100 parts by mass of the rubber component in the rubber composition is defined as D, in parts by mass, S / D is 0.13 or more.

It is considered that, as the content of silica in the rubber composition increases, the dispersibility of silica can be improved with the styrene groups by also increasing the total styrene amount in the rubber component, and flexibility of the rubber composition in the micro-deformation region improves, so that wet grip performance further improves.

The complex elastic modulus at 0°C (0°C E*) of the rubber composition is preferably 8.5 MPa or more and 16.0 MPa or less.

It is considered that the 0°C E* being set to be in the above-described range makes it possible to improve the road surface followability of the tread and to secure wet grip performance.

Preferably, the pair of shoulder land parts does not comprise a lug groove.

Not providing the shoulder land parts with the lug groove allows increasing the road surface ground contact area of the tire, making it possible to provide wet grip performance of a rubber.

Preferably, a groove depth H1 of the deepest part of the main circumferential groove is 15.0 mm or less, from a viewpoint of road surface groundability of a tire.

Preferably, the crown land part comprises a sipe extending in the tire width direction and the depth of the deepest part of the sipe is defined as H2, in mm, H2 / H1 is 0.25 or more.

It is considered that, by setting the H2 / H1 to be within the above-described range, a decrease in wet grip performance in the mid-wear stage and thereafter along with making the tread part highly rigid can be suppressed.

Preferably, the content of silica based on 100 parts by mass of the rubber component in the rubber composition is defined as D, in parts by mass, H1 x D is 250 or more.

It is considered that, with the product of H1 and D being set to be within the above-described range, and increasing the content of silica even when H1 is small, the road surface groundability of the tire and the road surface followability of the tread part synergistically improve.

Preferably, the tread ground width is defined as TW, in mm, Wc/TW is 0.003 or more and 0.020 or less, Ws/TW is over 0.020 and 0.060 or less.

It is considered that, by setting the Wc/TW and Ws/TW to be within the above-described ranges, wet grip performance can be secured.

<Definition>

The "tread part" is a portion forming the ground surface of a tire, and is a member being in the tire radial section and being on the outer side in the tire radial direction of a tire-framework forming member, if any, which tire-framework forming member includes a belt layer, a carcass layer, and the like, in which tire-framework forming member the tire framework is formed of steel or a textile material.

The "belt layer" is a layer provided on the outer side of the carcass layer in the tire radial direction.

A "standardized state" is a state where the tire is rim-assembled on a standardized rim, the air is filled at a standardized internal pressure, and no load is applied.

A "dimension of each part of a tire", unless otherwise noted, is a value specified in the standardized state for those appearing on the outer surface of the tire and is a value specified with the tire being cut in the plane including the tire rotational axis and the cut tire piece being held in the rim width of a standardized rim for those present in the interior of the tire and in the tire cutting plane.

The "standardized rim" is a rim defined for each tire in a standard system including a standard, on which the tire is based, by the standard, it refers to, for example, a "standard rim" in an applicable size listed in the "Jatma Year Book" in JATMA (Japan Automobile Tire Manufacturers Association), "Measuring Rim" listed in the "STANDARDS MANUAL" in ETRTO (The European Tyre and Rim Technical Organisation), or "Design Rim" listed in the "YEAR BOOK" in TRA (The Tire and Rim Association, Inc.), and JATMA, ETRTO, and TRA are referred to in that order, and, in a case that there is an applicable size at the time of reference, such a standard is followed. Then, in a case of a tire not defined in the above-described standard, it refers to a rim with the smallest rim width among rims with the smallest diameter that can be rim-assembled on the tire and that can hold internal pressure, in other words, rims that do not cause air leakage between the rim and the tire.

A "standardized internal pressure" is an air pressure defined for each tire in a standard system including a standard, on which the tire is based, by the standard, it refers to, for example, a "MAXIMUM AIR PRESSURE in JATMA, "INFLATION PRESSURE" in ETRTO, or a maximum value described in Table "TIRE LOAD LIMITS AT VARIOUS COLD INFLATION PRESSURES" in TRA, and JATMA, ETRTO, and TRA are referred to in that order in the same manner as for the standardized rim, and, in a case that there is an applicable size at the time of reference, such a standard is followed. Besides, in a case of a tire not defined in the above-described standard, it refers to the standardized internal pressure (but no less than 250 kPa) of another tire size (as defined in the standard) listed with the standardized rim as the standard rim, and, in a case that the standardized internal pressure of 250 kPa or more is listed in a plurality, it refers to the smallest value among them.

A "standardized load" is a load defined for each tire in a standard system including a standard, on which the tire is based, by the standard, and is, for example, a "maximum load rating" in JATMA, "LOAD CAPACITY" in ETRTO, or a maximum value described in Table "TIRE LOAD LIMITS AT VARIOUS COLD INFLATION PRESSURES" in TRA, and JATMA, ETRTO, and TRA are referred to in that order in the same manner as for the standardized rim and the standardized internal pressure and, in a case that there is an applicable size at the time of reference, such a standard is followed. Besides, in a case of a tire not defined in the above-described standard, a maximum load rating $W_L$ according to a separate calculation is defined as the standardized load.

The "maximum load rating $W_L$" is calculated according to the following calculation equations. "V" is a virtual volume, in $mm^3$, of the tire, "Dt" is a tire outer diameter, in mm, of the tire, "Ht" is a cross-sectional height, in mm, of the tire in the tire radial direction in the cross-section of the tire in the plane including the tire rotational axis, and "Wt" is a cross-sectional width, in mm, of the tire in the standardized state. Defining the rim diameter of the tire as R, Ht can be determined as (Dt - R)/2. Wt is a value obtained by excluding patterns or letters, if any, on the tire lateral surface.

$$W_L = 0.000011 \times V + 175$$

$$V = [(Dt/2)^2 - (Dt/2 - Ht)^2] \times \pi \times Wt$$

A "tread ground end Te" refers to the ground position on the outermost side in the tire width direction when a tire in a standardized state is loaded with a standardized load and in contact with a flat surface with a camber angle of 0°. A "tread ground width TW' is the distance between the tread ground ends Te in the tire width direction.

A "main circumferential groove" means a groove extending continuously in the tire circumferential direction, wherein the groove is a groove whose maximum value of a groove width orthogonal to the longitudinal direction is over 2.0% of the tread ground width TW when the tire is new. Moreover, a "thin circumferential groove" means a groove extending continuously in the tire circumferential direction, wherein the groove is a groove whose groove width orthogonal to the groove longitudinal direction is 2.0% or less of the tread ground width TW when the tire is new.

A "sipe" means a notch-shaped body extending in the tire width direction and whose width orthogonal to the groove longitudinal direction is less than 1.5 mm when the tire is new. Moreover, a "lug groove" means a grooveshaped body extending in the tire width direction and whose groove width orthogonal to the groove longitudinal direction is 1.5 mm or more when the tire is new.

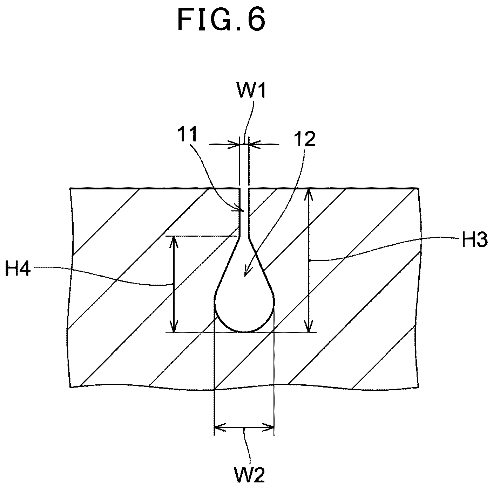

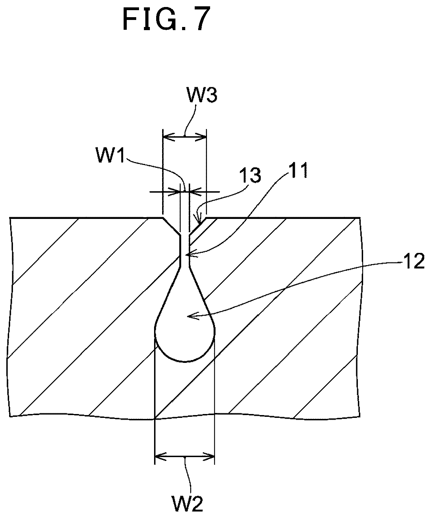

A "groove width" is to refer to a width (W1 in FIG. 6) at an opening in each of the main circumferential groove, the thin circumferential groove, the sipe, and the lug groove, wherein, in a case that the groove width varies in the longitudinal direction of the groove, the width is a maximum value of the groove width orthogonal to the longitudinal direction when the tire is new. Besides, in a case that a tapered part is provided in the opening of the groove as in FIG. 7, unless otherwise noted, the groove width at the opening is to be determined using the intersection between the extension line of the contour line of the groove wall surface and the extension line of the contour line of the land surface as a virtual edge (W1 in FIG. 7).

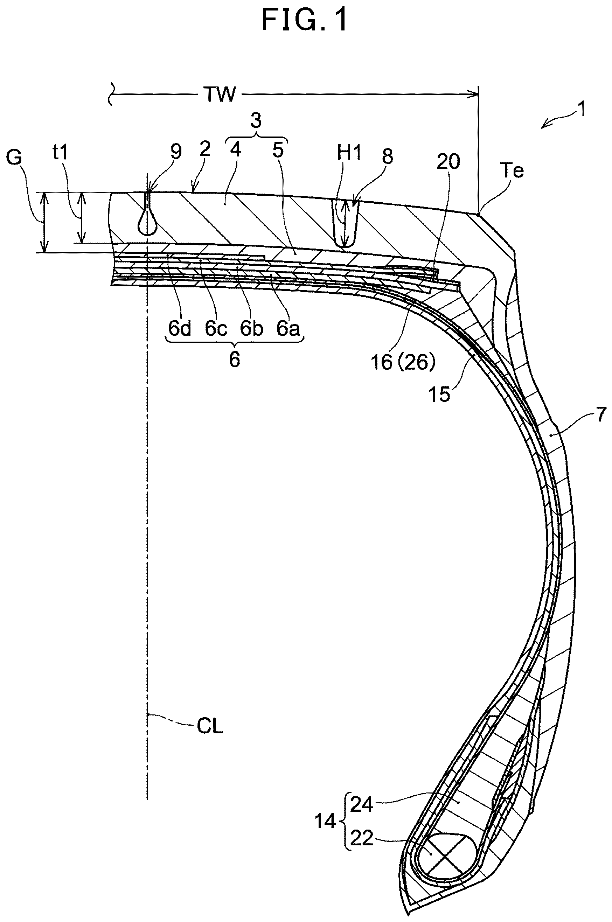

A "thickness of the tread part" is the thickness of the tread part on the tire center line, measured with the tire being cut in the plane including the tire rotational axis and being held in a standardized rim. Besides, an end of the thickness of the entire tread part, which end is on the inner side in the tire radial direction, is an interface of the rubber composition constituting the tread part, which interface is on the inner side in the tire radial direction, and, in a case that the tire comprises a belt reinforcing layer, a belt layer, and a carcass layer, among them, the outermost part of the outermost layer in the tire radial direction is the interface on the inner side in the tire radial direction. In a case a circumferential groove is provided on the tire equator plane, the thickness of the entire tread is measured assuming that the groove is filled. For example, in FIG. 1, G corresponds to the thickness of the tread part. A thickness t1 of the cap rubber layer constituting the tread part and the thickness of the other rubber layer are also measured in a similar manner.

The "groove depth H1 of the deepest part of the main circumferential groove" is determined by the distance between the tread surface and the deepest part of the groove bottom of the main circumferential groove. Besides, the deepest part of the groove bottom of the main circumferential groove is, of main circumferential grooves adjacent to the crown land part, the deepest part of the groove bottom of the main circumferential groove having the greatest groove depth.

The "depth H2 of the deepest part of the sipe" is determined by the distance between the tread surface and the deepest part of the sipe. Besides, the deepest part of the sipe is the deepest part of, among sipes present in the crown land part, a sipe having the greatest depth.

A "groove depth H3 of the deepest part of the thin circumferential groove" is determined by the distance between the tread surface and the deepest part of the groove bottom of the thin circumferential groove. Besides, the deepest part of the groove bottom of the thin circumferential groove is the deepest part of the groove bottom of, among thin circumferential grooves present in the crown land part, a thin circumferential groove having the greatest groove depth.

A "softener" is a material to impart plasticity to the rubber component and is a component extracted from the rubber composition using acetone. The softeners include liquid (liquid form) softeners at 25°C and solid softeners at 25°C. Besides, wax and stearic acid, commonly used in the tire industry, are not to be included.

A "content of a softener" also includes an amount of softeners comprised in extended rubber components extended in advance by softeners such as oil, a resin component, a liquid rubber component, and the like. Moreover, the same also applies to a content of oil, a content of a resin component, and a content of a liquid rubber, so that in a case that the extended component is oil, for example, the extended oil is comprised in the content of oil.

<Measurement method>

The "0°C tan $\delta$" is the loss tangent measured under a condition of a temperature at 0°C, a frequency of 10 Hz, an initial strain of 10%, a dynamic strain of $\pm 2.5\%$, and an elongation mode using a dynamic viscoelasticity evaluation apparatus (for example, EPLEXOR series manufactured by gabo Systemtechnik GmbH). A sample for the measurement of 0°C tan $\delta$ is a vulcanized rubber composition with 20 mm in length x 4 mm in width x 1 mm in thickness. When the sample is produced by cutting it out from a tire, it is cut out from the tread part of the tire such that the tire circumferential direction is the long side and the tire radial direction is a thickness direction.

The "0°C E*" is the complex elastic modulus measured under a condition of a temperature at 0°C, a frequency of 10 Hz, an initial strain of 10%, a dynamic strain of $\pm 2.5\%$, and an elongation mode using a dynamic viscoelasticity evaluation apparatus (for example, EPLEXOR series manufactured by gabo Systemtechnik GmbH). A sample for the present measurement is produced in the same manner as in a case of 0°C tan $\delta$.

A "styrene content" is a value calculated by $^1$H-NMR measurement and it is applied to a rubber component having repeating units derived from styrene, such as an SBR and the like, for example.

A "vinyl content (1,2-bond butadiene unit amount)" is a value calculated by infrared absorption spectrometry in accordance with JIS K 6239-2:2017 and is applied to a rubber component having repeating units derived from butadiene, such as an SBR, a BR, and the like, for example.

A "cis content (cis-1,4-bond butadiene unit amount)" is a value calculated by infrared absorption spectrometry in accordance with JIS K 6239-2:2017 and is applied to a rubber component having repeating units derived from butadiene, such as a BR and the like, for example.

A "total styrene amount in the rubber component" is a total content, in % by mass, of a styrene part comprised in 100% by mass of the rubber component, in which total content a value respectively obtained by multiplying the styrene content, in % by mass, by the mass fraction in the rubber component is calculated for each rubber component and these values are summed. Specifically, it is calculated by $\Sigma$ (the styrene content, in % by mass, of each styrene part-containing rubber x the content, in % by mass, in the rubber component of each styrene part-containing rubber / 100).

A "weight-average molecular weight (Mw)" can be determined in terms of a standard polystyrene conversion based on measurement values obtained by a gel permeation chromatography (GPC) (e.g., GPC-8000 Series manufactured by Tosoh Corporation, detector: differential refractometer, column: TSKgel SuperMultipore HZ-M manufactured by Tosoh Corporation). For example, it is applied to an SBR, a BR, and the like.

A "nitrogen adsorption-specific surface area (N$_2$SA) of carbon black" is measured in accordance with JIS K 6217-2: 2017.

A "nitrogen adsorption-specific surface area (N$_2$SA) of silica" is measured by the BET method in accordance with ASTM D 3037-93.

The "average primary particle diameter" is a value determined by photographing particles with a transmission or scanning electron microscope and taking the arithmetic mean of 400 particle diameters. In a case that the particles are spherical in shape, the diameter of the sphere is used as the particle diameter; and otherwise the circular equivalent diameter (positive square root of (4 x (the area of particles) /$\pi$)) is calculated from the electron microscope image and the calculated diameter is used as the particle diameter. The average primary particle diameter is applied to silica, carbon black, and the like.

The "softening point of the resin component" is the temperature at which a sphere drops after measuring the softening point specified in JIS K:6220-1:2015 7.7 with a ring-ball softening point measuring apparatus.

Below, appropriately using the drawings, a tire according to one embodiment of the present invention will be described. Besides, the drawings used merely show specifically one embodiment, so that the present invention is not limited by these drawings.

<Tire>

FIG. 1 is a cross-sectional view showing a part of a tire for heavy load according to one embodiment of the present invention. In FIG. 1, a vertical direction is a radial direction of a tire for heavy load 1, a horizontal direction is a tire width direction of the tire for heavy load 1, and a direction perpendicular to a paper surface is a circumferential direction of the tire for heavy load 1. In FIG. 1, except for the tread pattern, the shape of the tire for heavy load 1 is symmetrical with respect to a tire equator CL.

The tire for heavy load 1 comprises a tread part 3, a belt layer 6, a sidewall part 7, a bead part 14, an inner liner 15, and a carcass 16. The inner liner 15 is positioned on the inner side of the carcass 16. The tread part 3 forms a tread ground surface 2 to be in contact with the road surface. On the tread ground surface 2, two circumferential grooves being a main circumferential groove 8 and a thin circumferential groove 9, continuously extending in the tire circumferential direction, are formed.

The bead part 14 comprises a bead core 22, and an apex 24 extending from the bead core 22 outwardly in the radial direction. The bead core 22 is ring-shaped and comprises a wound non-stretchable wire. The apex 24 tapers outwardly in the tire radial direction.

The carcass 16 is composed of carcass plies 26. The carcass ply 26 is stretched between the bead part 14 on both sides and is positioned along the tread part 3 and the side wall part 7. The carcass ply 26 is folded around the bead core 22 toward the outer side from the inner side in the tire width direction. The carcass ply 26 is composed of a large number of cords in parallel and a topping rubber. The carcass 16 can be formed of two or more carcass plies 26.

The belt layer 6 extends in the tire width direction. The belt layer 6 is positioned on the inner side of the tread part 3 in the tire radial direction. The belt layer 6 is positioned on the outer side of the carcass 16 in the tire radial direction and reinforces the carcass 16.

The belt layer 6 is formed of four belt plies, comprising a first belt layer 6a, a second belt layer 6b, a third belt layer 6c, and a fourth belt layer 6d, laminated in order from the inner side in the tire radial direction. The first belt layer 6a is laminated on the carcass 16. In FIG. 1, in the tire rotational axis direction, the second belt layer 6b has the greatest width of the above-described four layers and the fourth belt layer 6d has the least width of the above-described four layers, but they are not limited to such aspects.

In FIG. 1, the tread part 3 comprises a cap rubber layer 4 whose outer surface constitutes the tread ground surface 2, and a base rubber layer 5 present between the cap rubber layer 4 and the belt layer 6, but they are not limited to such aspects, so that, as long as the effects of the present invention are achieved, the tread part 3 can be a single rubber layer, or can be formed of three or more rubber layers. Besides, in a case that two or more rubber layers are present between the cap rubber layer 4 and the belt layer 6, a layer with a thickness of 1 mm or more of layers closest to the belt layer 6 is defined as a base rubber layer.

The cap rubber layer 4 extends to both outer ends of the tread part 3 in the tire rotational axis direction. A covering rubber 20 covers each end of the second belt layer 6b and the third belt layer 6c.

A thickness G of the tread part is preferably 15.0 mm or more, more preferably 16.0 mm or more, further preferably 17.0 mm or more, and particularly preferably 18.0 mm or more. On the other hand, G is preferably 23.0 mm or less, more preferably 22.0 mm or less, further preferably 21.0 mm or less, and particularly preferably 20.0 mm or less.

A thickness t1 of the cap rubber layer is preferably 11.5 mm or more, more preferably 12.5 mm or more, further preferably 13.5 mm or more, and particularly preferably 14.5 mm or more. On the other hand, t1 is preferably 19.5 mm or less, more preferably 18.5 mm or less, further preferably 17.5 mm or less, and particularly preferably 16.5 mm or less.

From a viewpoint of the effects of the present invention, t1/G is preferably 0.65 or more, more preferably 0.70 or more, further preferably 0.73 or more, further preferably 0.76 or more, further preferably 0.79 or more, and particularly preferably 0.80 or more. On the other hand, the upper limit value of t1/G is not particularly limited, so that t1/G can be 1.0, but it is preferably less than 1.0, more preferably 0.95 or less, further preferably 0.90 or less, further preferably 0.85 or less, and particularly preferably 0.83 or less.

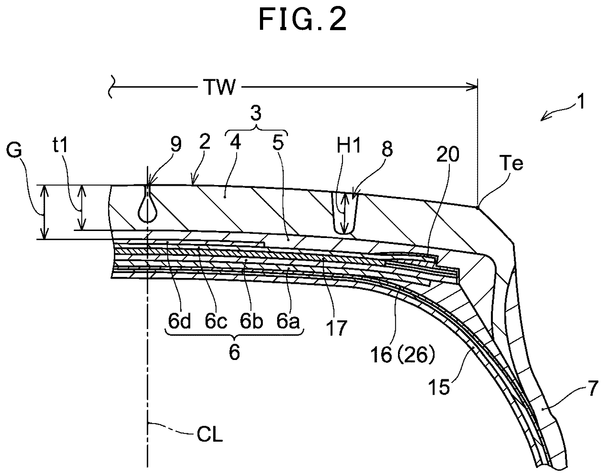

FIG. 2 is a variation of the tire for heavy load according to the present embodiment. For portions not explained below with respect to the variation, the above-described configuration of the tire for heavy load can be adopted.

In FIG. 2, a jointless band 17 is arranged between the second belt layer 6b and the third belt layer 6c. The second belt layer 6b and the third belt layer 6c have greater widths than that of the jointless band 17. In other words, a plurality of belt plies constituting the belt layer 6 comprise two belt plies having widths greater than the width of the jointless band 17, and the jointless band 17 is sandwiched by the two belt plies having the greater width.

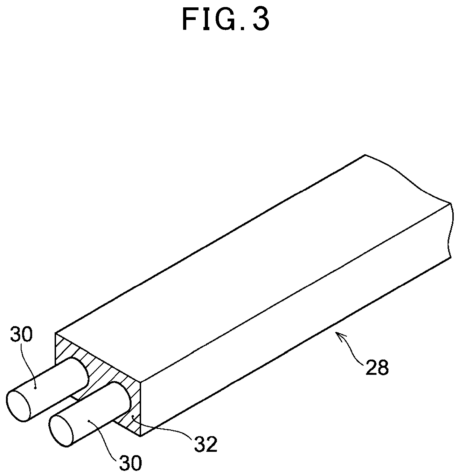

In FIG. 3, a ribbon 28 constituting the jointless band 17 is exemplified. The ribbon 28 comprises two cords 30 and a topping rubber 32, but it is not limited to such an aspect, so that the number of cords 30 in the ribbon 28 can be one, or can be three or more. By the ribbon 28 being wound spirally in the circumferential direction, the jointless band 17 is formed. The jointless band 17 has a so-called jointless structure. The respective cords 30 substantially extend in the circumferential direction. The angle of the cord 30 with respect to the circumferential direction is preferably 5° or less and more preferably 2° or less.

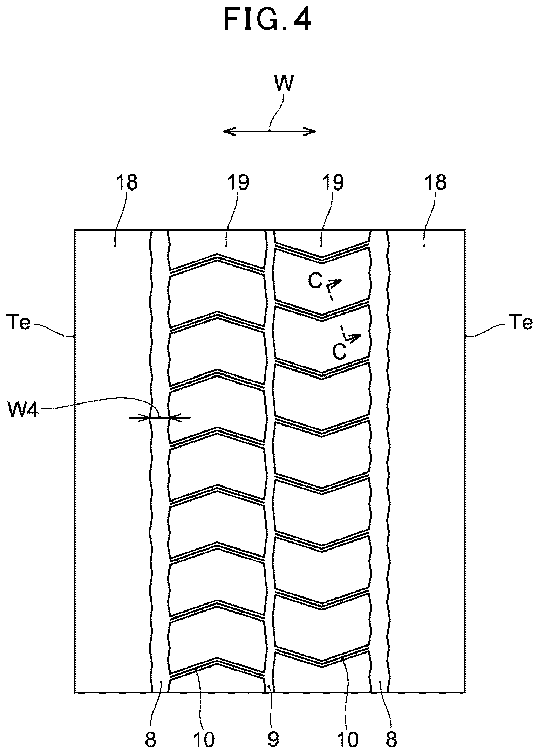

FIG. 4 shows one example of a developed view in which the tread pattern of the tire for heavy load according to the present embodiment is developed on a plane.

The tread part 3 comprises land parts divided by the two main circumferential grooves 8 extending continuously in the tire circumferential direction. A shoulder land part 18 is a land part in a pair, which land part is formed between the main circumferential groove 8 and a ground end Te. A crown land part 19 is a land part formed between the pair of shoulder land parts 18.

The main circumferential groove 8 extends in a zigzag shape with the center line of each main circumferential groove in the width direction oscillating sideways. Here, extending in a zigzag shape is intended to mean that the main circumferential groove extends in the tire circumferential direction while the center of the main circumferential groove in the tire circumferential direction oscillates in the tire width direction. Therefore, it includes a straight groove with repeated bends, but also a curved groove with repeated curves in a wavy shape. Besides, the main circumferential groove 8 can be zigzag-shaped or straight.

From a viewpoint of the effects of the present invention, a groove depth H1 of the deepest part of the main circumferential groove 8 is preferably 15.0 mm or less, more preferably 14.8 mm or less, further preferably 14.6 mm or less, further preferably 14.4 mm or less, and particularly preferably 14.2 mm or less. On the other hand, H1 is preferably 10.0 mm or more, more preferably 11.0 mm or more, and further preferably 12.0 mm or more.

From a viewpoint of the effects of the present invention, H1/G is preferably 0.60 or more, more preferably 0.62 or more, and further preferably 0.64 or more. On the other hand, H1/G is preferably 0.80 or less, more preferably 0.78 or less, further preferably 0.76 or less, and particularly preferably 0.74 or less.

A groove width Ws of the main circumferential groove is preferably 8.0 mm or more, more preferably 8.2 mm or more, and further preferably 8.4 mm or more. On the other hand, Ws is preferably 15.0 mm or less, more preferably 14.5 mm or less, and further preferably 14.0 mm or less.

The tread ground width is defined as TW, in mm, Ws/TW is over 0.020, preferably over 0.025, more preferably 0.030 or more, and further preferably 0.035 or more. On the other hand, Ws/TW is preferably 0.060 or less, more preferably 0.055 or less, and further preferably 0.050 or less.

In FIG. 4, the crown land part 19 comprises the one thin circumferential groove 9 extending continuously in the tire circumferential direction, but it is not limited to such an aspect, so that the crown land part 19 can comprise the thin circumferential groove 9 in a plurality. Moreover, in a manner similar to the main circumferential groove 8, in addition to extending in a zigzag shape, the thin circumferential groove 9 can be straight.

A groove width Wc of the thin circumferential groove is preferably 0.5 mm or more, more preferably 0.7 mm or more, further preferably 0.9 mm or more, and particularly preferably 1.0 mm or more. On the other hand, Wc is preferably 2.0 mm or less, more preferably 1.9 mm or less, further preferably 1.8 mm or less, and particularly preferably 1.7 mm or less.

Wc/TW is 0.020 or less, preferably 0.018 or less, more preferably 0.015 or less, and further preferably 0.012 or less. On the other hand, Wc/TW is preferably 0.003 or more and more preferably 0.004 or more.

Wc/Ws is 0.03 or more, more preferably 0.06 or more, and further preferably 0.09 or more. On the other hand, Wc/Ws is preferably 0.28 or less, more preferably 0.25 or less, further preferably 0.20 or less, and particularly preferably 0.15 or less.

The crown land part 19 comprises a sipe inclined in the tire circumferential direction or the tire width direction. Specifically, the sipe inclined in the tire circumferential direction or the tire width direction extends in a bent or curved manner in a process of proceeding in the width direction.

In FIG. 4, the crown land part 19 is provided with a plurality of center sipes 10 being communicatively connected to the main circumferential groove 8 and the thin circumferential groove 9 and being bent in a process from one end toward the other end in the width direction. The center sipe 10 is bent such that its direction of extension changes at the center in the width direction. Specifically, the center sipe 10 is inclined to shift toward one side of the tire in the circumferential direction as it moves from one end in the width direction toward the center in the width direction of the center sipe 10. Then, the center sipe 10 is bent at the center in the width direction and is inclined in the reverse direction such that it shifts toward the other side of the tire in the circumferential direction as it moves from the center to the other end in the width direction of the center sipe 10. In this way, it is considered that an improvement in wet grip performance with an increase in sipe length can be achieved by providing the crown land part 19 with a sipe being inclined in the tire circumferential direction or the tire width direction, and abrasion resistance can also be improved since the blocks supporting each other not only in the front-back direction but also in the lateral direction can contribute not only to rigidity improvement in the tire circumferential direction but also to rigidity improvement in the tire width direction.

The depth of the deepest part of the crown sipe 10 is defined as $H2$, in mm, $H2/H1$ is preferably 0.25 or more, more preferably 0.30 or more, further preferably 0.33 or more, and particularly preferably 0.40 or more. It is considered that, by setting $H2/H1$ to be within the above-described range, a decrease in wet grip performance in the mid-wear stage and thereafter along with making the tread part highly rigid can be suppressed. On the other hand, $H2/H1$ is preferably 1.0 or less and more preferably 0.95 or less.

In FIG. 4, the shoulder land part 18 is not provided with a lug groove or a sipe. It is considered that, by not providing the shoulder land part with the lug groove, the road surface ground contact area of the tire increases, making it easier to provide wet grip performance.

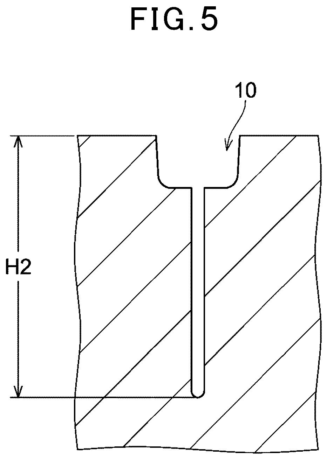

FIG. 5 shows a cross-sectional view cut along a line C-C of the crown sipe 10 shown in FIG. 4. As shown in FIG. 4, the crown sipe 10 comprises an opening whose groove width gradually decreases toward the inner side in the tire radial direction and a sipe part 30 on the inner side in the tire radial direction thereof, but it is not limited to such an aspect.

FIG. 6 shows the thin circumferential groove 9 in an enlarged manner. In FIG. 6, the cross-section of the thin circumferential groove 9 has a flask shape. Specifically, the thin circumferential groove 9 comprises a neck part 11, and a trunk part 12 arranged on the inner side of the neck part in the tire radial direction, which trunk part 12 has a portion with a groove width greater than the maximum groove width of the neck part. With such a cross-sectional shape, stress on the side walls of the land portion is relieved even in a case that a large load is applied to the tread part 2.

In the present embodiment, when the tire is new or in the early wear stage of the tread part 3, the portion of the thin circumferential groove 9 to appear on the tread surface is the neck part 11. The neck part can close by the load applied to the tread part 3, so that the rigidity of the tread part 3 in the tire axial direction is increased. On the other hand, as the wear of the tread part 3 progresses, the tread surface moves to the inner side in the tire radial direction, and the opening of the thin circumferential groove 9 shifts from the neck part to the trunk part. Therefore, as the wear progresses, the width of the thin circumferential groove 9 increases, so that the drainage performance of the tread part 3 in the mid-wear stage and thereafter is maintained at a high level.

In FIG. 6, the groove width of the neck part 11 is fixed at a minimum groove width $W1$ thereof and constant, but the neck part can have a portion with a groove width being greater than $W1$ as long as it provides the effects of the present invention. Therefore, in addition to the shape being straight as in FIG. 6, the cross-sectional shape of the neck part can be a zigzag shape. Here, the zigzag shape has the meaning similar to what is described above. Examples of one preferable aspect include the groove width of the neck part being constant at a minimum groove width thereof.

Moreover, the trunk part 12 has a portion with a groove width being greater than the maximum groove width of the neck part 11. Here, "having the portion with the groove width being greater than the maximum groove width of the neck part" means that the trunk part is configured to be wider than the maximum groove width of the neck part such that the effects of the present invention can be achieved. Therefore, the groove width of the trunk part is not particularly limited as long as the trunk part includes a portion with a groove width being greater than the maximum groove width of the neck part such that the effects of the present invention can be achieved, so that, for example, a part of the groove width of the trunk part can have a portion with a groove width less than the maximum groove width of the neck part, or the trunk part can be configured only with a portion with a groove width being greater than the groove width of the neck part. In FIG. 5, the groove width of the neck part 11 is fixed at the minimum groove width $W1$ thereof, so that the trunk part 12 is composed only of a portion with a groove width being greater than the groove width of the neck part 11.

The minimum groove width $W1$ of the neck part 11 is preferably 0.5 mm or more, more preferably 0.7 mm or more, further preferably 0.9 mm or more, and particularly preferably 1.0 mm or more. By setting $W1$ to be within the above-described range, it is made easier for water to flow from the neck part to the trunk part when traveling on a wet road surface, making it possible to easily secure sufficient drainage performance. On the other hand, $W1$ is preferably 2.0 mm or less, more preferably 1.9 mm or less, further preferably 1.8 mm or less, and particularly preferably 1.7 mm or less. By setting $W1$ to be within the above-described range, when a load is applied to the tread part 3 in the early wear stage, the neck part is likely to close due to the ground pressure, so that the rigidity of the tread part 3 in the tire axial direction is increased. Moreover, the rubber volume of the tread part 3 is easily secured. In this way, abrasion resistance of the tire for heavy load 1 improves.

The maximum groove width W2 of the trunk part 12 is preferably 2.0 mm or more, more preferably 3.0 mm or more, and further preferably 4.0 mm or more. By setting W2 to be within the above-described range, even in the late wear stage, the width of the thin circumferential groove 9 is easily secured, making it possible to easily secure sufficient drainage performance. On the other hand, W2 is preferably 12.0 mm or less, more preferably 11.0 mm or less, further preferably 10.0 mm or less, further preferably 9.0 mm or less, and particularly preferably 8.0 mm or less. By setting W2 to be within the above-described range, the rubber volume of the tread part 3 is easily secured. In this way, abrasion resistance of the tire for heavy load 1 improves.

W2/W1 is preferably 2.0 or more, more preferably 2.5 or more, further preferably 3.0 or more, and particularly preferably 3.5 or more. By setting W2/W1 to be within the above-described range, even in the late wear stage, the width of the flask-shaped circumferential groove 9 is easily secured, making it possible to easily secure sufficient drainage performance. On the other hand, W2/W1 is preferably 8.0 or less, more preferably 7.5 or less, further preferably 7.0 or less, and particularly preferably 6.5 or less. By setting W2/W1 to be within the above-described range, the rubber volume of the tread part 3 is easily secured. In this way, abrasion resistance of the tire for heavy load 1 improves.

The groove depth of the deepest part of the thin circumferential groove 9 is defined as H3, in mm, and the minimum length in the tire radial direction to the neck part 11 from the groove bottom of the thin circumferential groove 9 is defined as H4, in mm, H4/H3 is preferably 0.25 or more, more preferably 0.33 or more, and further preferably 0.40 or more. By setting W4/W3 to be within the above-described range, the groove volume of the trunk part is easily secured, making it possible to easily secure sufficient drainage performance in the late wear stage. Moreover, W4/W3 is preferably 0.75 or less and more preferably 0.73 or less. By setting W4/W3 to be within the above-described range, the rigidity of the tread part 3 in the tire axial direction is enhanced in the early wear stage. Moreover, the rubber volume of the tread part 3 is easily secured. In this way, abrasion resistance of the tire for heavy load 1 improves.

FIG. 7 is a variation of the thin circumferential groove 9. For the variation, with respect to portions not explained below, a configuration of the above-described thin circumferential groove can be adopted.

In FIG. 7, the thin circumferential groove is to comprise an opening 13 (a tapered part) whose groove width increases in a tapered shape, which opening is arranged on the outer side of the neck part 11 in the tire radial direction. With the tapered part 13, the volume of the circumferential groove 9 in the early wear stage increases. Moreover, with the tapered part 13, the volume of water flowing from the neck part into the trunk part increases. In this way, the drainage performance of the tread part 3 is enhanced.

The maximum groove width W2 of the trunk part is preferably greater than the maximum groove width W3 of the tapered part. In this way, the groove volume of the thin circumferential groove 9 in the trunk part is easily secured, making it possible to easily secure sufficient drainage performance in the late wear stage of the tread part 3.

The tan $\delta$ at 0°C (0°C tan $\delta$) of the rubber composition constituting the tread part is 0.28 or more, more preferably 0.29 or more, and further preferably 0.30 or more. On the other hand, from a viewpoint of suppressing heat-generating properties, the 0°C tan $\delta$ is preferably 0.35 or less, more preferably 0.34 or less, and further preferably 0.33 or less. Besides, in a case that the tread part comprises two or more rubber layers, the 0°C tan $\delta$ is to refer to the 0°C tan $\delta$ of the rubber composition constituting the cap rubber layer.

The complex elastic modulus at 0°C (0°C E*) of the rubber composition constituting the tread part is preferably 7.5 MPa or more, more preferably 8.0 MPa or more, further preferably 8.5 MPa or more, and particularly preferably 9.0 MPa or more, from a viewpoint of wet grip performance. On the other hand, from a viewpoint of wet grip performance, the 0°C E* is preferably 17.0 MPa or less, more preferably 16.5 MPa or less, and further preferably 16.0 MPa or less. Besides, in a case that the tread part comprises two or more rubber layers, the 0°C E* is to refer to the 0°C E* of the rubber composition constituting the cap rubber layer.

The 0°C E* and 0°C tan $\delta$ can be appropriately adjusted according to the type and compounding amount of a rubber component, a filler, a softener, and the like to be described below.

The 0°C tan $\delta$/(Wc/Ws) is over 1.0, preferably over 1.4, more preferably over 1.8, further preferably over 2.2, and particularly preferably over 2.6. On the other hand, the upper limit value of 0°C tan $\delta$/(Wc/Ws) is not particularly limited, but the 0°C tan $\delta$/(Wc/Ws) is preferably less than 3.5, more preferably less than 3.25, and further preferably less than 3.0.

A content of silica based on 100 parts by mass of the rubber component in the rubber composition constituting the tread part is defined as D, in parts by mass, H1 x D is preferably 250 or more, more preferably 300 or more, further preferably 350 or more, further preferably 400 or more, further preferably 450 or more, and particularly preferably 500 or more. Moreover, the upper limit value of H1 x D is not particularly limited, but H1 x D is preferably 1200 or less, more preferably 1000 or less, and further preferably 800 or less.

[Rubber composition]

A rubber composition constituting the tread part of the tire for heavy load according to the present embodiment (below called the rubber composition according to the present embodiment) is to comprise a rubber component and a filler, and can be manufactured using raw materials, all of which raw materials are to be explained below. Besides, in a case that the tread part is composed of two or more rubber layers, unless otherwise noted, the rubber composition constituting the tread part of the tire for heavy load according to the present embodiment is applicable to a rubber composition constituting any rubber layer of the tread part, but is preferably applied to a rubber composition constituting a cap rubber layer.

<Rubber component>

In the rubber composition according to the present embodiment, diene-based rubbers are suitably used as rubber components. Examples of the diene-based rubbers include, for example, isoprene-based rubbers, butadiene rubbers (BRs), styrene-butadiene rubbers (SBRs), styrene-isoprene rubbers (SIRs), a styrene-isoprene-butadiene rubber (SIBR), a chloroprene rubber (CR), an acrylonitrile-butadiene rubber (NBR), and the like. These diene-based rubbers can be modified rubbers treated with modified groups that can interact with fillers such as carbon black, silica, and the like, or can be hydrogenated rubbers in which some of the unsaturated bonds are hydrogenated. The diene-based rubbers can be used alone or two or more thereof can be used in combination. Moreover, an extended rubber preextended using a below-described plasticizer can also be used.

The content of the diene-based rubber in the rubber component is preferably 70% or more by mass, more preferably 80% or more by mass, further preferably 90% or more by mass, and particularly preferably 95% or more by mass. Moreover, the rubber component can be a rubber component consisting of only the diene-based rubber.

At least one selected, as the diene-based rubber component, from the group consisting of the isoprene-based rubber, the SBR, and the BR is suitably used. The diene-based rubber component preferably comprises the isoprene-based rubber, more preferably comprises the isoprene-based rubber and the SBR and/or BR, further comprises the isoprene-based rubber and the SBR, and particularly preferably comprises the isoprene-based rubber, the BR, and the SBR.

(Isoprene-based rubbers)

As the isoprene-based rubbers, those common in the tire industry, such as an isoprene rubber (IR), a natural rubber, and the like, for example, can be used. In the natural rubber, in addition to a non-refined natural rubber (NR), an epoxidized natural rubber (ENR), a hydrogenated natural rubber (HNR), a deproteinized natural rubber (DPNR), an ultra pure natural rubber, a refined natural rubber including a grafted natural rubber, etc., and the like are also included. These isoprene-based rubbers can be used alone or two or more thereof can be used in combination.

The NR is not particularly limited, and, as the NR, those common in the tire industry, such as, for example, SIR20, RSS#3, TSR20, and the like, can be used.

The content of the isoprene-based rubber in the rubber component, from a viewpoint of the effects of the present invention, is preferably 10% or more by mass, more preferably 20% or more by mass, further preferably 30% or more by mass, further preferably 40% or more by mass, further preferably 50% or more by mass, and particularly preferably 55% or more by mass. Moreover, the above-described content is preferably 99% or less by mass, more preferably 95% or less by mass, further preferably 90% or less by mass, and particularly preferably 85% or less by mass.

(BR)

The BR is not particularly limited, and those commonly used in the tire industry can be used, such as, for example, a BR having a cis content of less than 50 mol % (a low cis BR), a BR having a cis content of 90 mol % or more (a high cis BR), a rare-earth-based butadiene rubber synthesized using a rare earth element-based catalyst (a rare-earth-based BR), a BR containing a syndiotactic polybutadiene crystal (an SPB-containing BR), a modified BR (a high cis modified BR, a low cis modified BR), and the like. These BRs can be used alone or two or more thereof can be used in combination.

As the high cis BR, those commercially available from Zeon Corporation, Ube Industries, Ltd., JSR Corporation, etc., for example, can be used. When the high cis BR is comprised, abrasion resistance can be improved. The cis content of the high cis BR is preferably 95 mol % or more, more preferably 96 mol % or more, and further preferably 97 mol % or more. Besides, the cis content of the BR is measured by the above-described measuring method.

As the modified BR, a modified butadiene rubber (modified BR) modified with a functional group comprising at least one element selected from the group consisting of silicon, nitrogen, and oxygen at its terminal and/or main chain is suitably used.

Examples of the other modified BRs include those obtained by polymerizing 1,3-butadiene with a lithium initiator and then adding a tin compound, and in which a modified BR molecule is bonded by a tin-carbon bond at its terminal (a tin-modified BR), and the like. Moreover, the modified BR can be either hydrogenated or not hydrogenated.

A content of the BR in the rubber component is preferably 60% or less by mass, more preferably 50% or less by mass, further preferably 40% or less by mass, further preferably 30% or less by mass, and particularly preferably 25% or less by mass, from a viewpoint of the effects of the present invention. Moreover, the lower limit value of the content is not particularly limited, but the content can be set to be 1% or more by mass, 5% or more by mass, 10% or more by mass, 15% or more by mass, for example.

(SBR)

The SBR is not particularly limited, and examples thereof include a non-modified solution-polymerized SBR (S-SBR), an emulsion-polymerized SBR (E-SBR), modified SBRs thereof (a modified S-SBR, a modified E-SBR), and the like. Examples of the modified SBR include an SBR modified at its terminal and/or main chain, a modified SBR coupled with tin, a silicon compound, etc. (a modified SBR of condensate or having a branched structure, etc.), and the like. Among them, an S-SBR and modified SBRs are preferable. Moreover, a hydrogenated product of these SBRs (a hydrogenated SBR), and the like can also be used. These SBRs can be used alone or two or more thereof can be used in combination.

The SBRs listed above can be used alone or two or more thereof can be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc., for example, can be used.

A styrene content of the SBR can be appropriately selected such that a total styrene amount S in the rubber component satisfies the below-described range, but is preferably 40% or less by mass, more preferably 36% or less by mass, further preferably 32% or less by mass, and particularly preferably 28% or less by mass. Moreover, the styrene content of the SBR is preferably 5% or more by mass, more preferably 7% or more by mass, further preferably 10% or more by mass, and particularly preferably 12% or more by mass. Besides, the styrene content of the SBR is measured by the above-described measuring method.

A vinyl content of the SBR is preferably 5 mol % or more, more preferably 10 mol % or more, and further preferably 15 mol % or more, from viewpoints of ensuring reactivity with silica, and abrasion resistance. Moreover, the vinyl content of the SBR is preferably 45 mol % or less, more preferably 40 mol % or less, and further preferably 35 mol % or less, from viewpoints of elongation at break, and abrasion resistance. Besides, the vinyl content of the SBR is measured by the above-described measuring method.

From a viewpoint of the effects of the present invention, the weight-average molecular weight (Mw) of the SBR is preferably 100,000 or more, more preferably 200,000 or more, and further preferably 300,000 or more. Moreover, from a viewpoint of cross-linking uniformity, the weight-average molecular weight is preferably 2,000,000 or less, more preferably 1,800,000 or less, and further preferably 1,500,000 or less. Besides, the weight-average molecular weight of the SBR is measured by the above-described measuring method.

A content of the SBR in the rubber component can be appropriately selected such that the total styrene amount in the rubber component satisfies the below-described range, but is preferably 5% or more by mass, more preferably 10% or more by mass, and further preferably 15% or more by mass. Moreover, the above-described content is preferably 60% or less by mass, more preferably 50% or less by mass, further preferably 45% or less by mass, and particularly preferably 40% or less by mass.

(Other rubber components)

As the rubber component, rubber components other than the diene-based rubbers may be contained as long as they do not influence the effects of the present invention. As the rubber components other than the diene-based rubbers, a cross-linkable rubber component commonly used in the tire industry can be used, and examples of the cross-linkable rubber component include nondiene-based rubbers, such as, for example, a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone or two or more thereof may be used in combination. Moreover, in addition to the above-described rubber components, a known thermoplastic elastomer may or may not be contained.

The total styrene amount S in the rubber component is preferably 30% or less by mass, more preferably 27% or less by mass, further preferably 25% or less by mass, and further preferably 22% or less by mass, from a viewpoint of the effects of the present invention. Moreover, the lower limit value of the total styrene amount S in the rubber component is not particularly limited, but it is preferably 1% or more by mass, more preferably 3% or more by mass, further preferably 5% or more by mass, and further preferably 7% or more by mass.

A content of silica based on 100 parts by mass of the rubber component is defined as D, in parts by mass, S/D is preferably 0.050 or more, more preferably 0.080 or more, further preferably 0.10 or more, and particularly preferably 0.13 or more, from a viewpoint of the effects of the present invention. Moreover, the upper limit value of S/D is not particularly limited, but it can be set to be, for example, 2.00 or less, 1.50 or less, 1.00 or less. 0.80 or less, 0.60 or less, 0.50 or less.

\<Filler\>

As fillers, the rubber composition according to the present embodiment preferably comprises silica and more preferably comprises silica and carbon black. Moreover, the fillers can be fillers only consisting of silica and carbon black.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable from the reason that it has many silanol groups. Besides, in addition to silica described above, silica made from a biomass material such as rice husk and the like can be appropriately used. Such silica can be used alone or two or more thereof can be used in combination.

A nitrogen adsorption-specific surface area ($N_2SA$) of silica is preferably 100 $m^2/g$ or more, more preferably 120 $m^2/g$ or more, further preferably 140 $m^2/g$ or more, and particularly preferably 160 $m^2/g$ or more, from viewpoints of abrasion resistance and elongation at break. Moreover, it is preferably 350 $m^2/g$ or less, more preferably 300 $m^2/g$ or less, and further preferably 250 $m^2/g$ or less, from viewpoints of heat-generating properties and processability. Besides, the $N_2SA$ of silica is measured by the above-described measuring method.

The average primary particle diameter of silica is preferably 20 nm or less, more preferably 18 nm or less, further preferably 17 nm or less, and particularly preferably 16 nm or less. The lower limit value of the average primary particle diameter is not particularly limited, but the average primary particle diameter is preferably 1 nm or more, more preferably 3 nm or more, and further preferably 5 nm or more, from a viewpoint of the dispersibility of silica. Besides, the average primary particle diameter of silica can be determined by the above-described method.

The content D of silica based on 100 parts by mass of the rubber component can be appropriately set such that H1 x D satisfies the above-described range, for example, but is preferably 17 parts or more by mass, more preferably 20 parts or more by mass, further preferably 22 parts or more by mass, and particularly preferably 25 parts or more by mass. Moreover, from a viewpoint of reducing the specific gravity of rubber and achieving weight reduction, D is preferably 100 parts or less by mass, more preferably 90 parts or less by mass, further preferably 75 parts or less by mass, and particularly preferably 60 parts or less by mass.

(Carbon black)

Carbon black is not particularly limited, and those common in the tire industry can be used, such as GPF, FEF, HAF, ISAF, SAF, and the like, for example. These carbon blacks can be used alone or two or more thereof can be used in combination.

A nitrogen adsorption-specific surface area ($N_2SA$) of carbon black is preferably 20 $m^2/g$ or more, more preferably 50 $m^2/g$ or more, further preferably 80 $m^2/g$ or more, and particularly preferably 100 $m^2/g$ or more, from a viewpoint of reinforcing properties. Moreover, from viewpoints of fuel efficiency and processability, the $N_2SA$ is preferably 250 $m^2/g$ or less, more preferably 200 $m^2/g$ or less, and further preferably 150 $m^2/g$ or less. Besides, the $N_2SA$ of carbon black is measured by the above-described measuring method.

The average primary particle diameter of carbon black is preferably 30 nm or less, more preferably 26 nm or less, further preferably 23 nm or less, and particularly preferably 20 nm or less. The lower limit of the average primary particle diameter is not particularly limited, but the average primary particle diameter is preferably 5 nm or more, more preferably 8 nm or more, and further preferably 10 nm or more. Besides, the average primary particle diameter of carbon black is determined by the above-described method.

(The other fillers)

Fillers other than silica and carbon black are not particularly limited, and, as fillers other than silica and carbon black, those commonly used conventionally in the tire industry can be compounded, such as aluminum hydroxide, alumina (aluminum oxide), calcium carbonate, magnesium sulfate, talc, clay, biochar, and the like, for example. Such other fillers can be used alone or two or more thereof can be used in combination.

The total content of fillers based on 100 parts by mass of the rubber component is preferably 30 parts or more by mass, more preferably 40 parts or more by mass, further preferably 50 parts or more by mass, and particularly preferably 55 parts or more by mass, from a viewpoint of the effects of the present invention. Moreover, the above-described content is preferably 100 parts or less by mass, more preferably 90 parts or less by mass, further preferably 80 parts or less by mass, and particularly preferably 70 parts or less by mass.

The content of silica in the filler is preferably over 40% by mass, more preferably over 50% by mass, further preferably over 60% by mass, further preferably over 70% by mass, and particularly preferably over 80% by mass.

Moreover, the upper limit value of the above-described content is not particularly limited, but can be set to be, for example, less than 99% by mass, less than 95% by mass, less than 90% by mass.

(Silane coupling agent)

Silica is preferably used in combination with a silane coupling agent. The silane coupling agent is not particularly limited, so that an arbitrary silane coupling agent conventionally used in combination with silica in the tire industry can be used, and examples include, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycydoxy-based silane coupling agents such as $\gamma$-glycidoxypropyltriethoxysilane, $\gamma$-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, the rubber composition preferably comprises sulfide-based silane coupling agents and/or mercapto-based silane coupling agents. As the silane coupling agents, those commercially available from Evonik Degussa GmbH, Momentive Performance Materials, and the like, for example, can be used. These silane coupling agents can be used alone or two or more thereof can be used in combination.

A content of the silane coupling agent based on 100 parts by mass of the rubber component is preferably 1.0 parts or more by mass, more preferably 2.0 parts or more by mass, and further preferably 2.5 parts or more by mass, from a viewpoint of enhancing the dispersibility of silica. Moreover, from a viewpoint of preventing a decrease in abrasion resistance, it is preferably 12 parts or less by mass, more preferably 10 parts or less by mass, and further preferably 8.0 parts or less by mass.

A content of the silane coupling agent based on 100 parts by mass of silica is preferably 1.0 parts or more by mass, more preferably 3.0 parts or more by mass, and further preferably 5.0 parts or more by mass, from a viewpoint of enhancing the dispersibility of silica. Moreover, from a viewpoint of preventing a decrease in abrasion resistance, it is preferably 30 parts or less by mass, more preferably 20 parts or less by mass, and further preferably 15 parts or less by mass.

<Softener>

The rubber composition according to the present embodiment preferably comprises a softener. Examples of the softeners include a resin component, oil, a liquid rubber, and the like, for example. Besides, these softeners also include extended oils, extended resins, extended liquid rubber components that have undergone oil extension, resin extension, liquid rubber extension, and the like. These softeners may be petroleum-derived or biomass-derived. Moreover, low molecular weight hydrocarbon components obtained by thermal decomposition and extraction of used tires and products comprising various components may also be used as the softeners.

(Resin component)

The rubber composition relating to the present embodiment may comprise a resin component in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. The resin components may also be used alone, respectively, or two or more thereof may be used in combination.

<<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

<<C5-based resin>>

A "C5-based resin" refers to a resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C9-based resin, for example, those commercially available from STRUKTOL, Zeon Corporation, ENEOS Corporation, etc. can be used.

<<C5/C9-based resin>>

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

<<Dicyclopentadiene-based resin>>

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A "coumarone-based resin" refers to a resin comprising coumarone as a monomer component and may be one obtained by hydrogenating or modifying it. As the coumarone-based resin, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

<<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

<<Terpene-based resin>>

A "terpene-based resin" refers to a resin comprising a terpene compound such as $\alpha$-pinene, $\beta$-pinene, limonene,

dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

<<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

<<Phenol-based resin>>

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

The softening point of the resin component is preferably 60°C or more, more preferably 70°C or more, and further preferably 80°C or more, from a viewpoint of grip performance. Moreover, it is preferably 150°C or less, more preferably 140°C or less, and further preferably 130°C or less, from viewpoints of processability, improving the dispersibility of the rubber component and the filler. Besides, the softening point of the resin component is measured by the above-described measuring method.

When the rubber composition comprises the resin component, the content of the resin component based on 100 parts by mass of the rubber component is preferably 1 parts or more by mass, more preferably 3 parts or more by mass, and further preferably 5 parts or more by mass, from a viewpoint of the effects of the present invention. Moreover, from a viewpoint of suppressing heat generation, it is preferably 50 parts or less by mass, more preferably 40 parts or less by mass, and particularly preferably 30 parts or less by mass.

(Oil)

Examples of oils include, for example, process oils, vegetable oils, and the like. Examples of the process oils include a paraffin-based process oil (mineral oil), a naphthene-based process oil, an aromatic-based process oil, and the like. Specific examples of the process oils include, for example, mild extraction solvates (MES); a distillate aromatic extract (DAE); a treated distillate aromatic extract (TDAE); a treated residual aromatic extract (TRAE); a residual aromatic extract (RAE), and the like. Moreover, as an environmental measure, a process oil having a low content of a polycyclic aromatic compound (PCA) can also be used. Examples of the process oil having a low content of a PCA include MES; TDAE; a heavy naphthenic oil, and the like. Moreover, from a viewpoint of life cycle assessment, a waste oil after being used in a rubber mixer, an engine, and the like, and a waste cooking oil used in restaurants, which waste cooking oil is appropriately purified, can also be used.

When the rubber composition comprises oil, the content of oil based on 100 parts by mass of the rubber component is preferably 1 parts or more by mass, more preferably 3 parts or more by mass, and further preferably 5 parts or more by mass, from a viewpoint of processability. Moreover, from a viewpoint of improving abrasion resistance, it is preferably 50 parts or less by mass, more preferably 40 parts or less by mass, further preferably 30 parts or less by mass, and particularly preferably 25 parts or less by mass.

(Liquid rubber)

The liquid rubber is not particularly limited as long as it is a rubber in a liquid state at room temperature (25°C), and examples of the liquid rubber include, for example, a liquid butadiene polymer (a liquid BR), a liquid isoprene rubber polymer (a liquid IR), a liquid styrene-butadiene copolymer (a liquid SBR), a liquid styrene-isoprene copolymer (a liquid SIR), a polymer comprising, as a monomer component, myrcene, farnesene, and the like. These liquid rubbers may be used alone, or two or more thereof may be used in combination.

When the rubber composition comprises the liquid rubber, the content of the liquid rubber based on 100 parts by mass of the rubber component is preferably 1 parts or more by mass, more preferably 3 parts or more by mass, and further preferably 5 parts or more by mass. Moreover, the above-described content is preferably 50 parts or less by mass, more preferably 40 parts or less by mass, and further preferably 30 parts or less by mass.

The content of the softener (in a case that a plurality of softeners are used in combination, a total content of all thereof) based on 100 parts by mass of the rubber component is preferably 1 parts or more by mass, more preferably 3 parts or more by mass, and further preferably 5 parts or more by mass, from a viewpoint of the effects of the present invention. Moreover, the content is preferably 100 parts or less by mass, more preferably 80 parts or less by mass, further preferably 60 parts or less by mass, and particularly preferably 40 parts or less by mass.

<The other compounding agent>

The rubber composition according to the present embodiment can appropriately comprise compounding agents commonly used conventionally in the tire industry, such as, for example, wax, an antioxidant, stearic acid, zinc oxide, a vulcanizing agent, a vulcanization accelerator, and the like, in addition to the previously-described components.

The waxes are not particularly limited, those commonly used in the tire industry can be used, and examples of the waxes include, for example, petroleum wax, mineral wax, synthetic wax, and the like, and petroleum wax is preferable. Examples of the petroleum wax includes, for example, paraffin wax, microcrystalline wax, refined special wax thereof, and the like, and paraffin wax is preferable. Besides, wax according to the present embodiment is to not include stearic acid. As commercially available waxes, those commercially available from Ouchi Shinko Chemical Industry Co., Ltd., Nippon Seiro, Co., Ltd., Paramelt Co., Ltd., and the like, for example, can be used. These waxes can be used alone or two or more thereof can be used in combination.

When the rubber composition comprises the wax, the content of the wax based on 100 parts by mass of the rubber component is, from a viewpoint of weather resistance of a rubber, preferably 0.5 parts or more by mass, more preferably 1.0 parts or more by mass, and further preferably 1.5 parts or more by mass. Moreover, it is preferably 10 parts or less by mass and more preferably 5.0 parts or less by mass, from a viewpoint of preventing whitening of a tire due to bloom.

The antioxidant is not particularly limited, and examples thereof include, for example, an antioxidant such as each amine-based, quinoline-based, quinone-based, phenol-based, and imidazole-based compound, a carbamate metal salt, and the like. Among them, phenylenediamine-based antioxidants such as N-(1,3-Dimethylbutyl)-N'-phenyl-p-phenylenediamine, N-Isopropyl-N'-phenyl-p-phenylenediamine, N,N'-Diphenyl-p-phenylenediamine, N,N'-Di-2-naphthyl-p-phenylenediamine, N-cyclohexyl-N'-phenyl-p-phenylenediamine, and the like, and quinoline-based antioxidants such as polymerized 2,2,4-trimethyl-1,2-dihydroquinoline, 6-Ethoxy-2,2,4-trimethyl-1,2-dihydroquinoline, and the like are preferable. These antioxidants may be used alone or two or more thereof may be used in combination.

When the rubber composition comprises the antioxidant, the content of the antioxidant based on 100 parts by mass of the rubber component is, from a viewpoint of ozone crack resistance of a rubber, preferably 0.5 parts or more by mass, more preferably 1.0 parts or more by mass, and further preferably 1.5 parts or more by mass. Moreover, it is preferably 10 parts or less by mass and more preferably 5.0 parts or less by mass, from viewpoints of abrasion resistance and wet grip performance.

When the rubber composition comprises the stearic acid, the content of the stearic acid based on 100 parts by mass of the rubber component is, from a viewpoint of processability, preferably 0.5 parts or more by mass, more preferably 1.0 parts or more by mass, and further preferably 1.5 parts or more by mass. Moreover, it is preferably 10 parts or less by mass and more preferably 5.0 parts or less by mass, from a viewpoint of vulcanization rate.

When the rubber composition comprises the zinc oxide, the content of the zinc oxide based on 100 parts by mass of the rubber component is, from a viewpoint of processability, preferably 0.5 parts or more by mass, more preferably 1.0 parts or more by mass, and further preferably 1.5 parts or more by mass. Moreover, it is preferably 10 parts or less by mass and more preferably 5.0 parts or less by mass, from a viewpoint of abrasion resistance.

Sulfur is suitably used as the vulcanizing agent. As sulfur, a powdered sulfur, an oil-treated sulfur, a precipitated sulfur, a colloidal sulfur, an insoluble sulfur, a highly dispersible sulfur, and the like can be used.

When the rubber composition comprises sulfur as the vulcanizing agent, a content of sulfur based on 100 parts by mass of the rubber component is preferably 0.1 parts or more by mass, more preferably 0.3 parts or more by mass, and further preferably 0.5 parts or more by mass, from a viewpoint of securing a sufficient vulcanization reaction. Moreover, the content is preferably 5.0 parts or less by mass, more preferably 4.0 parts or less by mass, further preferably 3.0 parts or less, and particularly preferably 2.5 parts or less by mass from a viewpoint of preventing deterioration.

Examples of vulcanizing agents other than sulfur include, for example, alkylphenol-sulfur chloride condensate, 1,6-hexamethylene-sodium dithiosulfate dehydrate, 1,6-bis(N, N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerators include sulfenamide-based, thiazole-based, guanidine-based, thiuram-based, and dithiocarbamatebased vulcanization accelerators, caprolactam disulfide, and the like, for example. These vulcanization accelerators can be used alone or two or more thereof can be used in combination. Among them, from a viewpoint that desired effects can be more suitably obtained, one or a plurality of vulcanization accelerators to be selected from the group consisting of sulfenamide-based, thiazole-based, thiuram-based, and guanidine-based vulcanization accelerators are preferable, and a combined use of the sulfenamide-based vulcanization accelerator and the guanidine-based vulcanization accelerator is more preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N, N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or salt thereof, di-2-benzothiazolyl disulfide (MBTS), 2-(2, 4-dinitrophenyl) mercaptobenzothiazole, 2-(2,6-diethyl-4-morpholinothio) benzothiazole, and the like. Among them, MBTS and MBT are preferable, and MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable.

When the rubber composition comprises the vulcanization accelerator, the content of the vulcanization accelerator based on 100 parts by mass of the rubber component is preferably 1.0 parts or more by mass, more preferably 1.5 parts or more by mass, and further preferably 2.0 parts or more by mass. Moreover, the content of the vulcanization accelerator based on 100 parts by mass of the rubber component is preferably 8 parts or less by mass, more preferably 7 parts or less by mass, and further preferably 6 parts or less by mass. When the content of the vulcanization accelerators is within the above-described ranges, there is a tendency to be able to secure breaking strength and elongation.

[Rubber composition and manufacturing of the rubber composition]

The rubber composition according to the present embodiment can be manufactured by a known method. For example, it can be manufactured by kneading each of the previously-described components using a rubber kneading apparatus such as an open roll, a closed type kneader (Bunbury mixer, kneader, and the like), and the like.

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can also be divided into a plurality of steps, if desired.

Kneading conditions are not particularly limited, and, for example, a method of kneading at a discharge temperature of 150 to 170°C for 3 to 10 minutes in the base kneading step and kneading at 70 to 110°C for 1 to 5 minutes in the final kneading step is exemplified. Vulcanization conditions are not particularly limited, and, for example, a method of vulcanizing at 150 to 200°C for 10 to 30 minutes is exemplified.

Tires of the present invention, each of which tires comprising a tread composed of the rubber composition, can be manufactured by a usual method. In other words, an unvulcanized rubber composition in which the above-described respective components are compounded as needed to the rubber component is extruded to fit the shape of the tread, pasted together with other tire members on a tire molding machine, and molded in a usual method to form an unvulcanized tire. This unvulcanized tire can be heated and pressurized in a vulcanizing machine to manufacture a tire. Vulcanization conditions are not particularly limited, and, for example, a method of vulcanizing at 150 to 200°C for 10 to 30 minutes is exemplified.

[Application for tire]

Tires for heavy load according to the present embodiment can be suitably used as tires for trucks and buses and can also be used as tires for electric vehicles (EVs) therefor. Besides, the tires for heavy load are tires being intended to be mounted on a four-wheeled automobile, and refer to those with the maximum load rating of 1000 kg or more. The maximum load rating of the tires for heavy load is preferably 1200 kg or more and more preferably 1400 kg or more.

EXAMPLE

Examples considered to be preferable in implementation (Examples) are shown below, but the scope of the present invention is not to be limited to the Examples.

Various chemicals used in Examples and Comparative examples are collectively shown below:

NR: RSS#3

SBR: EUROPRENE (registered trademark) SOL R C2525 (styrene content: 26% by mass, vinyl content: 24 mol %, Mw: 600,000, non-oil extended product), manufactured by Versalis S.p.A.

BR: BUNA CB24 (BR synthesized using Nd-based catalyst, cis content: 96 mol %, Mw: 500,000), manufactured by ARLANXEO

Carbon black: Show Black N134 ($N_2SA$: 148 $m^2$/g, average primary particle diameter: 18 nm), manufactured by Cabot Japan K.K.

Silica 1: ULTRASIL (registered trademark) VN3 ($N_2SA$: 175 $m^2$/g, average primary particle diameter: 17 nm), manufactured by Evonik Degussa GmbH

Silica 2: ULTRASIL (registered trademark) 9100GR ($N_2SA$: 235 $m^2$/g, average primary particle diameter: 15 nm), manufactured by Evonik Degussa GmbH

Silane coupling agent: Si266 (bis(3-triethoxysilylpropyl)disulfide), manufactured by Evonik Degussa GmbH

Resin component: YS RESIN PX800 (Terpene-based resin comprising β-pinene as monomer components, softening point: 80°C), manufactured by Yasuhara Chemical, Co., Ltd.

Antioxidant: NOCRAC 6C (N-phenyl-N'-(1,3-Dimethylbutyl)-p-phenylenediamine), manufactured by Ouchi Shinko Chemical Industrial Co., Ltd.

Stearic acid: Beads stearic acid "Tsubaki", manufactured by NOF CORPORATION

Zinc oxide: Zinc oxide No. 1, manufactured by Mitsui Mining & Smelting Co., Ltd.

Sulfur: Powdered sulfur (5% oil-containing powdered sulfur), manufactured by Tsurumi Chemical Industry Co.

Vulcanization accelerator 1: Nocceler NS-P (N-tert-butyl-2-benzothiazolylsulfenamide (TBBS)), manufactured by Ouchi Shinko Chemical Industry Co., Ltd.

Vulcanization accelerator 2: Nocceler D (1,3-Diphenylguanidine (DPG)), manufactured by Ouchi Shinko Chemical Industry Co., Ltd.

(Examples and comparative examples)

According to the compounding formulations shown in Table 1 using a 1.7 L closed Banbury mixer, chemicals other than sulfur and vulcanization accelerators are kneaded for 1 to 10 minutes until a discharge temperature reaches 150 to 160°C to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is extruded and molded into the shape of the cap rubber layer of the tread using an extruder comprisng a mouth of a predetermined shape, pasted together with the base rubber layer and other tire members to produce an unvulcanized tire, and the unvulcanized tire is press-vulcanized at 170°C for 12 minutes to obtain each of the test tires listed in Table 1.

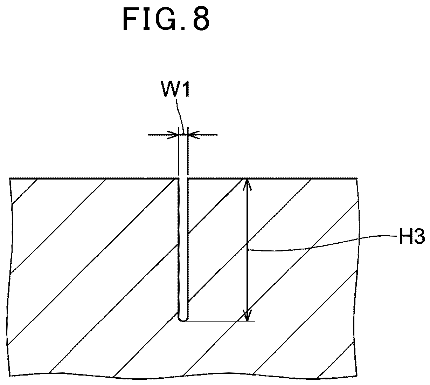

Results calculated based on evaluation methods described below are shown in Table 1, considering tires for heavy load (size: 275/70R22.5, rim: 22.5 x 7.50, internal pressure: 900 kPa), each of which forms a basic structure shown in FIG. 1, has the tread pattern of FIG. 4, and comprises the tread part produced using the rubber composition obtained by changing the compounding in accordance with Table 1. Besides, for the thin circumferential groove, W1 is 1.0 mm, W2 is 4.0 mm, H3 is 14.0 mm, H4 is 10 mm; the groove depth W4 of the main thin circumferential groove is 9.0 mm; the tread ground width TW is 228 mm; the thickness G of the tread part is 19.0 mm; and the thickness t1 of the cap rubber layer is 15.5 mm. Besides, FIG. 8 is a cross-sectional view of a thin circumferential groove not comprising a trunk part and in which thin circumferential groove the groove width W1 is constant in the tire radial direction.

<Measurements of 0°C tan δ and 0°C E*>

A sample for the present measurements is produced by cutting out, from the tread part of each test tire, with 20 mm in length x 4 mm in width x 1 mm in thickness, such that the tire circumferential direction is the long side and the tire radial direction is a thickness direction. For each rubber test piece, the loss tangent (tan δ) and the complex elastic modulus (E*) are measured under a condition of a temperature at 0°C, a frequency of 10 Hz, an initial strain of 10%, a dynamic strain of 2.5%, and an elongation mode, using a dynamic viscoelasticity evaluation apparatus (EPLEXOR series manufactured by gabo Systemtechnik GmbH).

<Wet grip performance>

Each test tire is assembled onto a rim, and the rim-assembled test tire is mounted on the rear wheels of a bus, the test vehicle. With this test vehicle, the braking distance on a wet asphalt road surface from the initial speed of 100 km/h is determined. Results are shown in indices with the result of a reference comparative example (Comparative example 1) as 100. The greater the index, the better the wet grip performance.

$$\text{(wet grip performance index)} =$$

$$\text{(braking distance of reference comparative example)} / \text{(braking distance of each}$$

$$\text{test tire)} \times 100$$

Table 1

| | Example | | | | | | | |
|---|---|---|---|---|---|---|---|---|
| | 1 | 2 | 3 | 4 | 5 | 6 | 7 | 8 |
| **Compounding amount (parts by mass)** | | | | | | | | |
| **NR** | 80 | 80 | 60 | 60 | 60 | 60 | 60 | 60 |
| **SBR** | - | - | 20 | 20 | 40 | 20 | 20 | 20 |
| **BR** | 20 | 20 | 20 | 20 | - | 20 | 20 | 20 |
| **Carbon black** | 30 | 30 | 30 | 10 | 10 | 10 | 10 | 10 |
| **Silica 1** | - | 25 | 25 | 48 | 48 | 48 | 48 | 48 |
| **Silica 2** | 25 | - | - | - | - | - | - | - |
| **Silane coupling agent** | 2.5 | 2.5 | 2.5 | 2.5 | 2.5 | 2.5 | 2.5 | 2.5 |
| **Resin component** | 5.0 | 5.0 | 5.0 | 5.0 | 5.0 | 5.0 | 5.0 | 5.0 |
| **Antioxidant** | 1.5 | 1.5 | 1.5 | 1.5 | 1.5 | 1.5 | 1.5 | 1.5 |
| **Stearic acid** | 3.0 | 3.0 | 3.0 | 3.0 | 3.0 | 3.0 | 3.0 | 3.0 |
| **Zinc oxide** | 3.5 | 3.5 | 3.5 | 3.5 | 3.5 | 3.5 | 3.5 | 3.5 |
| **Sulfur** | 1.0 | 1.0 | 1.0 | 1.0 | 1.0 | 1.0 | 1.0 | 1.0 |
| **Vulcanization accelerator** 1 | 1.0 | 1.0 | 1.0 | 1.0 | 1.0 | 1.0 | 1.0 | 1.0 |
| **Vulcanization accelerator** 2 | 0.5 | 0.5 | 0.5 | 1.0 | 1.0 | 1.0 | 1.0 | 1.0 |
| **Physical property Total styrene amount S, in % by mass** | 0 | 0 | 5 | 5 | 10 | 5 | 5 | 5 |
| **0°C tan $\delta$** | 0.28 | 0.28 | 0.29 | 0.30 | 0.31 | 0.30 | 0.30 | 0.30 |
| **0°C E\*, in MPa Tire** | 14 | 15 | 15 | 16 | 16 | 16 | 16 | 16 |
| **Wc, in mm** | 1.0 | 1.0 | 1.0 | 1.0 | 1.0 | 1.0 | 1.0 | 1.0 |
| **Ws, in mm** | 9.0 | 9.0 | 9.0 | 9.0 | 9.0 | 9.0 | 9.0 | 9.0 |
| **Wc / Ws** | 0.11 | 0.11 | 0.11 | 0.11 | 0.11 | 0.11 | 0.11 | 0.11 |
| **H1, in mm** | 14.0 | 14.0 | 14.0 | 14.0 | 14.0 | 14.0 | 14.0 | 14.0 |
| **H2/ H1** | 0.50 | 0.50 | 0.50 | 0.50 | 0.50 | 0.50 | 0.50 | 1.0 |
| **Thin circumferential groove** | FIG8 | FIG8 | FIG8 | FIG8 | FIG8 | FIG6 | FIG8 | FIG8 |
| **Jointless band** | W/O | W/O | W/O | W/O | W/O | W/O | With | W/O |
| **0°C tan $\delta$ / (Wc / Ws)** | 2.52 | 2.52 | 2.61 | 2.70 | 2.79 | 2.70 | 2.70 | 2.70 |
| **H1 x D** | 350 | 350 | 350 | 672 | 672 | 672 | 672 | 672 |
| **S / D** | 0 | 0 | 0.20 | 0.10 | 0.21 | 0.10 | 0.10 | 0.10 |
| **Wet grip performance** | 115 | 115 | 120 | 123 | 128 | 129 | 123 | 124 |

Table 1

| | Comparative example | | |
|---|---|---|---|
| | 1 | 2 | 3 |
| **Compounding amount (parts by mass)** | | | |
| **NR** | 80 | 100 | 80 |
| **SBR** | - | - | - |
| **BR** | 20 | - | 20 |
| **Carbon black** | 30 | 30 | 30 |
| **Silica 1** | - | - | - |
| **Silica 2 Silane coupling agent** | 25 2.5 | 25 2.5 | 10 1.0 |
| **Resin component** | 5.0 | 5.0 | 5.0 |
| **Antioxidant** | 1.5 | 1.5 | 1.5 |
| **Stearic acid** | 3.0 | 3.0 | 3.0 |
| **Zinc oxide** | 3.5 | 3.5 | 3.5 |
| **Sulfur** | 1.0 | 1.0 | 2.0 |
| **Vulcanization accelerator 1** | 1.0 | 1.0 | 1.0 |
| **Vulcanization accelerator 2** | 0.5 | 0.5 | 0.2 |
| **Physical property** | | | |
| **Total styrene amount S, in % by mass** | 0 | 0 | 0 |
| **0°C tan $\delta$** | 0.28 | 0.27 | 0.25 |
| **0°C E\*, in MPa Tire** | 14 | 17 | 8 |
| **Wc, in mm** | 3.0 | 3.0 | 3.0 |
| **Ws, in mm** | 9.0 | 9.0 | 9.0 |
| **Wc / Ws** | 0.33 | 0.33 | 0.33 |
| **H1, in mm** | 14.0 | 14.0 | 14.0 |
| **H2/ H1** | 0.50 | 0.50 | 0.50 |
| **Thin circumfe-rential groove** | FIG8 | FIG8 | FIG8 |
| **Jointless band** | W/O | W/O | W/O |
| **0°C tan $\delta$ / (Wc / Ws)** | 0.84 | 0.81 | 0.76 |
| **H1 x D** | 350 | 350 | 140 |
| **S / D** | 0 | 0 | 0 |
| **Wet grip performance** | 100 | 99 | 91 |

REFERENCE SIGNS LIST

1 Tire for heavy load
2 Tread surface
3 Tread part
4 Cap rubber layer
5 Base rubber layer
6 Belt layer
7 Sidewall
8 Main circumferential groove
9 Thin circumferential groove
10 Crown sipe
11 Neck part
12 Trunk part

13 Tapered part
14 Bead part
15 Inner liner
16 Carcass
17 Jointless band
18 Shoulder land part
19 Crown land part
20 Covering rubber
22 Bead core
24 Apex
26 Carcass ply
28 Ribbon 30 Cord
32 Topping rubber
CL Tire equator
W Tire width direction
Te Tread ground end
TW Tread ground width
E Maximum thickness of shoulder land part
L Maximum thickness line of shoulder land part
W1 Minimum groove width of neck part
W2 Maximum groove width of trunk part
W3 Maximum groove width of tapered part
H1 Groove depth of deepest part of main circumferential groove
H2 Depth of deepest part of sipe
H3 Depth of flask-shaped circumferential groove
H4 Distance to neck part from groove bottom of flask-shaped circumferential groove

**Claims**

1. A tire (1) for heavy load, which tire (1) comprises a tread part (3),

   wherein the tread part (3) comprises a main circumferential groove (8) in a plurality, which main circumferential groove (8) extends continuously in the tire circumferential direction, a pair of shoulder land parts (18) divided by the main circumferential groove (8) and a ground end (Te), and a crown land part (19) positioned between the pair of shoulder land parts (18), and
   wherein the tread part (3) is composed of a rubber composition comprising a rubber component and a filler,
   **characterized in that**
   the crown land part (19) comprises one or a plurality of thin circumferential grooves (9) extending continuously in the tire circumferential direction,
   wherein the groove width of the main circumferential groove (8) is defined as Ws, in mm, the groove width of the thin circumferential groove (9) is defined as Wc, in mm, and the $\tan \delta$ at 0°C of the rubber composition is defined as 0°C $\tan \delta$,
   0°C $\tan \delta$ is 0.28 or more and 0°C $\tan \delta$ /(Wc / Ws) is over 1.0,
   wherein the $\tan \delta$ at 0°C is measured under a condition of a frequency of 10 Hz, an initial strain of 10%, a dynamic strain of $\pm 2.5\%$, and an elongation mode using a dynamic viscoelasticity evaluation apparatus.

2. The tire (1) for heavy load of claim 1, wherein the filler comprises silica having an average primary particle diameter of 17 nm or less.

3. The tire (1) for heavy load of claim 1 or 2, wherein the rubber component comprises a styrene-butadiene rubber.

4. The tire (1) for heavy load of any one of claims 1 to 3, wherein a content of silica in the filler is over 50% by mass.

5. The tire (1) for heavy load of any one of claims 1 to 4, wherein the thin circumferential groove (9) comprises a neck part (11) having a small groove width, and a trunk part (12) arranged on the inner side of the neck part (11) in the tire radial direction, which trunk part (12) has a portion with a groove width greater than the maximum groove width of the neck part (11).

6. The tire (1) for heavy load of any one of claims 1 to 5, comprising a jointless band.

7. The tire (1) for heavy load of any one of claims 1 to 6, wherein Wc/Ws is 0.09 or more.

8. The tire (1) for heavy load of any one of claims 1 to 7, wherein the total styrene amount in the rubber component is defined as S, in % by mass, a content of silica based on 100 parts by mass of the rubber component in the rubber composition is defined as D, in parts by mass, S / D is 0.13 or more.

9. The tire (1) for heavy load of any one of claims 1 to 8, wherein the complex elastic modulus at 0°C (0°C E*) of the rubber composition is 8.0 MPa or more and 16.0 MPa or less, wherein the complex elastic modulus at 0°C (0°C E*) is measured under a condition of a frequency of 10 Hz, an initial strain of 10%, a dynamic strain of ±2.5%, and an elongation mode using a dynamic viscoelasticity evaluation apparatus.

10. The tire (1) for heavy load of any one of claims 1 to 9, wherein the pair of shoulder land parts (18) does not comprise a lug groove.

11. The tire (1) for heavy load of any one of claims 1 to 10, wherein a groove depth H1 of the deepest part of the main circumferential groove (8) is 15.0 mm or less.

12. The tire (1) for heavy load of claim 11, wherein the crown land part (19) comprises a sipe (10) extending in the tire width direction and the depth of the deepest part of the sipe (10) is defined as H2, in mm, H2 / H1 is 0.25 or more.

13. The tire (1) for heavy load of claim 11 or 12, wherein the content of silica based on 100 parts by mass of the rubber component in the rubber composition is defined as D, in parts by mass, H1 x D is 250 or more.

14. The tire (1) for heavy load of any one of claims 1 to 13, wherein the tread ground width is defined as TW, in mm, Wc/TW is 0.003 or more and 0.020 or less, Ws/TW is over 0.020 and 0.060 or less.

15. The tire (1) for heavy load of any one of claims 6 to 14,

   further comprising a belt layer (6),
   wherein a plurality of belt plies constituting the belt layer (6) comprises two belt plies having a width greater than the width of the jointless band (17), and the jointless band (17) is sandwiched by the two belt plies having the greater width.

**Patentansprüche**

1. Reifen (1) für schwere Lasten, wobei der Reifen (1) einen Laufstreifenabschnitt (3) umfasst,

   wobei der Laufstreifenabschnitt (3) eine Hauptumfangsrille (8) in einer Mehrzahl, wobei sich die Hauptumfangsrille (8) kontinuierlich in der Reifenumfangsrichtung erstreckt, ein Paar durch die Hauptumfangsrille (8) unterteilter Schulterpositivprofilabschnitte (18) und ein Bodenende (Te) sowie einen zwischen dem Paar von Schulterpositivprofilabschnitten (18) angeordneten Kronenpositivprofilabschnitt (19) umfasst, und
   wobei der Laufstreifenabschnitt (3) mit einer Kautschukzusammensetzung aufgebaut ist, die eine Kautschukkomponente und einen Füllstoff umfasst,
   **dadurch gekennzeichnet, dass**
   der Kronenpositivprofilabschnitt (19) eine oder mehrere dünne Umfangsrillen (9) umfasst, die sich kontinuierlich in der Reifenumfangsrichtung erstrecken,
   wobei die Rillenbreite der Hauptumfangsrille (8) als Ws, in mm, definiert ist, die Rillenbreite der dünnen Umfangsrille (9) als Wc, in mm, definiert ist, und der tan δ bei 0 °C der Kautschukzusammensetzung als 0 °C tan δ definiert ist,
   0°C tan δ 0,28 oder mehr beträgt und 0°C tan δ /(Wc / Ws) über 1,0 beträgt,
   wobei der tan δ bei 0 °C unter Bedingungen einer Frequenz von 10 Hz, einer Anfangsdehnung von 10 %, einer dynamischen Dehnung von ±2,5 % und eines Streckungsmodus unter Verwendung einer Vorrichtung zur Bewertung der dynamischen Viskoelastizität gemessen ist.

2. Reifen (1) für schwere Lasten nach Anspruch 1, wobei der Füllstoff Siliciumdioxid umfasst, das einen durchschnittlichen Primärpartikeldurchmesser von 17 nm oder weniger aufweist.

3. Reifen (1) für schwere Lasten nach Anspruch 1 oder 2, wobei die Kautschukkomponente einen Styrol-Butadien-Kautschuk umfasst.

4. Reifen (1) für schwere Lasten nach einem der Ansprüche 1 bis 3, wobei ein Gehalt an Siliciumdioxid im Füllstoff über 50 Massenprozent beträgt.

5. Reifen (1) für schwere Lasten nach einem der Ansprüche 1 bis 4, wobei die dünne Umfangsrille (9) einen Halsabschnitt (11), der eine geringe Rillenbreite aufweist, und einen in der Reifenradialrichtung auf der Innenseite des Halsabschnitts (11) angeordneten Rumpfabschnitt (12) umfasst, wobei der Rumpfabschnitt (12) einen Bereich mit einer Rillenbreite aufweist, die größer ist als die maximale Rillenbreite des Halsabschnitts (11).

6. Reifen (1) für schwere Lasten nach einem der Ansprüche 1 bis 5, der ein nahtloses Band umfasst.

7. Reifen (1) für schwere Lasten nach einem der Ansprüche 1 bis 6, wobei Wc/Ws 0,09 oder mehr beträgt.

8. Reifen (1) für schwere Lasten nach einem der Ansprüche 1 bis 7, wobei die Gesamtstyrolmenge in der Kautschukkomponente als S, in Massen-%, definiert ist, ein Gehalt an Siliciumdioxid, bezogen auf 100 Massenteile der Kautschukkomponente in der Kautschukzusammensetzung, als D, in Massenteilen, definiert ist, wobei S/D 0,13 oder mehr beträgt.

9. Reifen (1) für schwere Lasten nach einem der Ansprüche 1 bis 8, wobei der komplexe Elastizitätsmodul bei 0 °C (0°C E*) der Kautschukzusammensetzung 8,0 MPa oder mehr und 16,0 MPa oder weniger beträgt, wobei der komplexe Elastizitätsmodul bei 0 °C (0°C E*) unter Bedingungen einer Frequenz von 10 Hz, einer Anfangsdehnung von 10 %, einer dynamischen Dehnung von $\pm$2,5 % und eines Streckungsmodus unter Verwendung einer Vorrichtung zur Bewertung der dynamischen Viskoelastizität gemessen ist.

10. Reifen (1) für schwere Lasten nach einem der Ansprüche 1 bis 9, wobei das Paar von Schulterpositivprofilabschnitten (18) keine Stollenrille umfasst.

11. Reifen (1) für schwere Lasten nach einem der Ansprüche 1 bis 10, wobei eine Rillentiefe H1 des tiefsten Abschnitts der Hauptumfangsrille (8) 15,0 mm oder weniger beträgt.

12. Reifen (1) für schwere Lasten nach Anspruch 11, wobei der Kronenpositivprofilabschnitt (19) eine sich in der Reifenbreitenrichtung erstreckende Lamelle (10) umfasst und die Tiefe des tiefsten Abschnitts der Lamelle (10) als H2, in mm, definiert ist, H2 / H1 0,25 oder mehr beträgt.

13. Reifen (1) für schwere Lasten nach Anspruch 11 oder 12, wobei der Gehalt an Siliciumdioxid, bezogen auf 100 Massenteile der Kautschukkomponente in der Kautschukzusammensetzung, als D, in Massenteilen, definiert ist, H1 $\times$ D 250 oder mehr beträgt.

14. Reifen (1) für schwere Lasten nach einem der Ansprüche 1 bis 13, wobei die Laufstreifenbodenbreite als TW in mm definiert ist, Wc/TW 0,003 oder mehr und 0,020 oder weniger beträgt, Ws/TW über 0,020 und 0,060 oder weniger beträgt.

15. Reifen (1) für schwere Lasten nach einem der Ansprüche 6 bis 14,

der ferner eine Gürtelschicht (6) umfasst,
wobei eine Vielzahl von die Gürtelschicht (6) bildenden Gürtellagen zwei Gürtellagen umfasst, die eine Breite aufweisen, die größer ist als die Breite des nahtlosen Bandes (17), und das nahtlose Band (17) zwischen den beiden Gürtellagen mit der größeren Breite eingeschlossen ist.

**Revendications**

1. Pneumatique (1) pour charge lourde, lequel pneumatique (1) comprend une partie de bande de roulement (3),

la partie de bande de roulement (3) comprenant une rainure circonférentielle principale (8) en pluralité, laquelle rainure circonférentielle principale (8) s'étend en continu dans la direction circonférentielle du pneumatique, une paire de parties en relief d'épaulement (18) divisées par la rainure circonférentielle principale (8) et une extrémité au sol (Te), et une partie en relief de couronne (19) située entre la paire de parties en relief d'épaulement (18), et la partie de bande de roulement (3) étant composée d'une composition de caoutchouc comprenant un composant de caoutchouc et une charge,

**caractérisé en ce que**

la partie en relief de couronne (19) comprend une ou une pluralité de rainures circonférentielles minces (9) s'étendant en continu dans la direction circonférentielle du pneumatique,

la largeur de rainure de la rainure circonférentielle principale (8) étant définie par Ws, en mm, la largeur de rainure de la rainure circonférentielle mince (9) étant définie par Wc, en mm, et le tan $\delta$ à 0 °C de la composition de caoutchouc étant défini par 0 °C tan $\delta$,

0 °C tan $\delta$ étant de 0,28 ou plus et 0 °C tan $\delta$ /(Wc / Ws) étant supérieur à 1,0,

le tan $\delta$ à 0 °C étant mesuré dans des conditions de fréquence de 10 Hz, de déformation initiale de 10 %, de déformation dynamique de $\pm 2,5$ % et d'un mode d'allongement en utilisant un appareil d'évaluation de la viscoélasticité dynamique.

2. Pneumatique (1) pour charge lourde selon la revendication 1, dans lequel la charge comprend de la silice ayant un diamètre moyen des particules primaires de 17 nm ou moins.

3. Pneumatique (1) pour charge lourde selon la revendication 1 ou 2, dans lequel le composant de caoutchouc comprend un caoutchouc styrène-butadiène.

4. Pneumatique (1) pour charge lourde selon l'une quelconque des revendications 1 à 3, dans lequel la teneur en silice de la charge est supérieure à 50 % en masse.

5. Pneumatique (1) pour charge lourde selon l'une quelconque des revendications 1 à 4, dans lequel la rainure circonférentielle mince (9) comprend une partie de col (11) comportant une faible largeur de rainure, et une partie de corps (12) disposée sur le côté intérieur de la partie de col (11) dans la direction radiale du pneumatique, laquelle partie de corps (12) comporte une portion dont la largeur de rainure est supérieure à la largeur de rainure maximale de la partie de col (11).

6. Pneumatique (1) pour charge lourde selon l'une quelconque des revendications 1 à 5, comprenant une bande sans joint.

7. Pneumatique (1) pour charge lourde selon l'une quelconque des revendications 1 à 6, dans lequel Wc/Ws est de 0,09 ou plus.

8. Pneumatique (1) pour charge lourde selon l'une quelconque des revendications 1 à 7, dans lequel la quantité de styrène totale dans le composant de caoutchouc est définie par S, en % en masse, une teneur en silice par rapport à 100 parties en masse du composant de caoutchouc dans la composition de caoutchouc est définie par D, en parties en masse, S/D est de 0,13 ou plus.

9. Pneumatique (1) pour charge lourde selon l'une quelconque des revendications 1 à 8, dans lequel le module d'élasticité complexe à 0 °C (0 °C E*) de la composition de caoutchouc est de 8,0 MPa ou plus et de 16,0 MPa ou moins, le module d'élasticité complexe à 0 °C (0 °C E*) étant mesuré dans des conditions de fréquence de 10 Hz, de déformation initiale de 10 %, de déformation dynamique de $\pm$ 2,5 % et d'un mode d'allongement en utilisant un appareil d'évaluation de la viscoélasticité dynamique.

10. Pneumatique (1) pour charge lourde selon l'une quelconque des revendications 1 à 9, dans lequel la paire de parties d'épaulement (18) ne comprend pas de rainure de barrette.

11. Pneumatique (1) pour charge lourde selon l'une quelconque des revendications 1 à 10, dans lequel une profondeur H1 de la partie la plus profonde de la rainure circonférentielle principale (8) est de 15,0 mm ou moins.

12. Pneumatique (1) pour charge lourde selon la revendication 11, dans lequel la partie en relief de couronne (19) comprend une lamelle (10) s'étendant dans la direction de la largeur du pneumatique et la profondeur de la partie la plus profonde de la lamelle (10) est définie par H2, en mm, H2 / H1 étant égal ou supérieur à 0,25.

**13.** Pneumatique (1) pour charge lourde selon la revendication 11 ou 12, dans lequel la teneur en silice, par rapport à 100 parties en masse du composant de caoutchouc dans la composition de caoutchouc, est définie par D, en parties en masse, H1 × D est de 250 ou plus.

**14.** Pneumatique (1) pour charge lourde selon l'une quelconque des revendications 1 à 13, dans lequel la largeur au sol de la bande de roulement est définie par TW, en mm, Wc/TW est de 0,003 ou plus et de 0,020 ou moins, Ws/TW est supérieur à 0,020 et de 0,060 ou moins.

**15.** Pneumatique (1) pour charge lourde selon l'une quelconque des revendications 6 à 14,
comprenant en outre une couche de ceinture (6),
dans lequel une pluralité de nappes de ceinture constituant la couche de ceinture (6) comprend deux nappes de ceinture comportant une largeur supérieure à la largeur de la bande sans joint (17), et la bande sans joint (17) est prise en sandwich entre les deux nappes de ceinture comportant la plus grande largeur.

# FIG. 1

# FIG.2

# FIG.3

# FIG.4

# FIG.5

# FIG.6

W1

11          12

H4          H3

W2

# FIG.7

EP 4 559 697 B1

# FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06279624 A
- JP H115411 A
- US 2023219370 A1
- US 2023023252 A1
- EP 4197805 A1
- EP 4389457 A1
- EP 4438335 A1